# EUROPÄISCHE PATENTSCHRIFT

(11) **EP 2 610 111 B1**
(45) Veröffentlichungstag und Bekanntmachung des Hinweises auf die Patenterteilung: **18.06.2014**
(21) Anmeldenummer: 13001013.5
(22) Anmeldetag: 26.02.2011
(51) Int. Cl.: B60R 9/06

(54) **Lastenträger mit einer beweglichen Stütze**
Load carrier with a mobile support
Structure de charge avec support mobile

(30) Priorität: 03.03.2010 DE 102010010245
(43) Veröffentlichungstag der Anmeldung: 03.07.2013
(62) Teilanmeldung aus: 11400014.4
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 33449 Langenberg (DE); Peitz, Jürgen, 33378 Rheda-Wiedenbrück (DE)
(74) Vertreter: Bregenzer, Michael

(56) Entgegenhaltungen:
- EP-A1- 2 080 671
- EP-A1- 2 098 412
- EP-A1- 2 256 001
- DE-A1-102007 023 495
- DE-A1-102008 012 689

## Beschreibung

Die Erfindung betrifft einen Lastenträger für ein Kraftfahrzeug, insbesondere einen Personenkraftwagen, mit einem Tragegestell zum Tragen von Lasten, gemäß dem Oberbegriff des Anspruchs 1.

Ein derartiger Lastenträger ist in DE 10 2007 023495 A1 erläutert.

Ein Lastenträger, der in der Art einer Schublade aus dem Heck eines Kraftfahrzeuges ausfahrbar ist, ist z.B. in DE 10 2009 057 668 beschrieben. Beispielsweise hat dessen Schlitten-Führungsbasis Führungsschienen, an denen Läuferschienen eines Schlittens schiebebeweglich gelagert sind. An den durch Tragprofile gebildeten Läuferschienen ist eine U-förmige Stütze schwenkbar gelagert. Ferner sind an Anhängekupplungen lösbare Lastenträger bekannt. Z.B. hat ein aus DE 10 2008 012 689 bekannter Lastenträger eine schwenkbewegliche U-förmige Stütze.

Lastenträger sowohl abnehmbarer Art als auch fest am Kraftfahrzeug montierte Lastenträger sollen in ihrer Ruhestellung oder Nichtgebrauchsstellung möglichst kompakt sein, so dass sie abseits des Kraftfahrzeuges oder in einer Schubladenausnehmung des Kraftfahrzeuges bequem verstaut werden können. Dementsprechend sollen Stützen, Trägerrinnen und dergleichen andere Erweiterungsbauteile, die am Tragegestell angeordnet sind, in freie Zwischenräume geschwenkt werden können, beispielsweise in den Zwischenraum zwischen den Tragprofilen.

Zwischenräume in der Art des zwischen den Tragprofilen vorhandenen Zwischenraumes sind ohnehin vorhanden, da ein Lastenträger möglichst gewichtssparend aufgebaut sein soll.

Auf der anderen Seite belasten die vorgenannte Stütze oder auch sonstige Erweiterungsbauteile das Tragegestell zusätzlich, wenn eine Last am Lastenträger befestigt ist. Beispielsweise wirken Hebelkräfte von einem Fahrrad, das auf dem Lastenträger abgestellt und an der Stütze befestigt ist, auf die Stütze. Die im Fahrbetrieb auftretenden Belastungen können erheblich sein, so dass das Tragegestell hochbelastbar ausgeführt sein muss, was jedoch der weiteren Anforderung der Gewichtsersparnis entgegensteht.

Es ist daher die Aufgabe der vorliegenden Erfindung, einen Lastenträger bereitzustellen, der in der Ruhestellung kompakte Ausmaße, beim Gebrauch jedoch eine hohe Belastbarkeit weist.

Zur Lösung der Aufgabe ist ein Lastenträger gemäß der technischen Lehre des Anspruchs 1 vorgesehen.

Ein Grundgedanke der Erfindung ist es, dass der Querträger quasi im Bereich der Stütze ist, wodurch das Tragegestell an dieser Stelle verstärkt ist. Somit ist also gerade dort, wo die Stütze angreift, ein Querträger vorhanden. Dennoch ist die Verstellbarkeit der Stütze, beispielsweise eines Uförmigen Bügels, nicht eingeschränkt. Vielmehr taucht die Stütze unter dem Querträger durch, wenn sie von der Stützstellung in die Nichtgebrauchsstellung gebracht wird, oder umgekehrt.

Der Basiskörper kann im einfachsten Fall beispielsweise der Fuß eines Trägerstabes oder eines Seitenschenkels der Stütze sein. Eine zweckmäßige Ausgestaltung der Erfindung sieht vor, dass der Basiskörper sozusagen die Stützbasis für von ihm abstehende Trägerstäbe, insbesondere Seitenschenkel eines U-förmigen Bügels, bildet.

Der Querträger, der zweckmäßigerweise in der Haltestellung oder Stützstellung in Eingriff mit dem Basiskörper ist oder diesen abstützt, verstärkt die gesamte Konfiguration der Stütze, so dass insbesondere im Falle eines Aufpralles auf den Lastenträger eine wesentlich höhere Stabilität realisiert ist.

Weiterhin ermöglicht die erfindungsgemäße Führungseinrichtung, dass die Stütze verhältnismäßig hoch bauen, dennoch in der Nichtgebrauchsstellung platzsparend untergebracht werden kann, da nicht nur eine Schwenklagerung, sondern auch eine Schiebelagerung mit Vorteil vorhanden ist.

Anders als bei üblichen Konstruktionen schwächt die Stütze die mechanische Belastbarkeit des Lastenträgers nicht, sondern erhöht sie insbesondere in der Stützstellung vorteilhaft noch wesentlich.

Weiterhin ist es vorteilhaft, wenn der Lastenträger zumindest in seiner Gebrauchsstellung verwindungsarm und steif ist.

Der Basiskörper erstreckt sich quer zwischen den Tragprofilen und wirkt mit dem Querträger bei der Bewegung zwischen der Nichtgebrauchsstellung und der Stützstellung oder auch nur in der Stützstellung zusammen. Der Basiskörper ist beispielsweise in Führungskontakt und/oder Haltekontakt mit dem Querträger. Mithin kann also der Querträger zur Führung des Basiskörpers herangezogen werden. Es versteht sich, dass der Querträger aber auch beispielsweise zum Halten des Basiskörpers und somit der Stütze dienen kann. Es versteht sich, dass der Kontakt auch ein indirekter Kontakt sein kann, dergestalt, dass beispielsweise zwischen dem Basiskörper und den Tragprofilen und/oder dem Basiskörper und dem Querträger ein Zwischenkörper oder Lagerteil vorhanden sein kann.

Bevorzugt stützt sich der Basiskörper zumindest in der Stützstellung stirnseitig an den Tragprofilen ab. Es versteht sich, dass dies auch in den Zwischenstellungen zwischen der Nichtgebrauchsstellung und der Stützstellung oder auch der Ruhestellung der Fall sein kann, wie später in der Zeichnung noch dargestellt.

Zweckmäßigerweise bildet der Basiskörper eine Querstrebe oder eine Stützstrebe für das Tragegestell. So kann beispielsweise vorgesehen sein, dass der Querträger als eine Art Zugstab oder zugfest haltendes Bauteil zwischen den Tragprofilen wirkt, das heißt der Querträger fest mit den Tragprofilen verbunden ist, während die Druckfestigkeit durch den Basiskörper bereitgestellt wird. Auch hier gilt zu erwähnen, dass sich der Basiskörper nicht unmittelbar an den Tragprofilen abstützen muss, sondern dass auch eine mittelbare Abstützung über beispielsweise eine Zwischenlage oder einen Zwischenkörper möglich ist.

Der Basiskörper hat zweckmäßigerweise eine blockförmige oder balkenartige Gestalt. Bevorzugt ist der Basiskörper als ein Kunststoffbauteil ausgestaltet, insbesondere als eine Art Gehäusebauteil. Es versteht sich, dass Verrippungen oder sonstige Verstärkungen bei dem Basiskörper zweckmäßig sein können. Dies dient insbesondere auch zur Vergrößerung der Druckfestigkeit des Basiskörpers. Mithin hat also der Basiskörper zweckmäßigerweise eine blockartige Gestalt. Bei der Materialauswahl kann es ausreichend sein, dass der Basiskörper insbesondere auf Druckfestigkeit optimiert ist, während die Zugfestigkeit vom benachbarten Querträger bereitgestellt wird.

Die Stütze kann zweckmäßigerweise eine Führungsfläche zur Führung an dem Querträger bei der Bewegung zwischen der Nichtgebrauchsstellung und der Stützstellung aufweisen. Bevorzugt ist die Führungsfläche an oder in einer Aufnahme, insbesondere einer in Richtung der Querachse verlaufenden Nut vorgesehen. Mithin ist also die Aufnahme zweckmäßigerweise nutartig. Bevorzugt ist die Aufnahme am Basiskörper angeordnet, wobei auch an anderer Stelle eine entsprechende Aufnahme an der Stütze vorgesehen sein könnte.

Die Funktion des Querträgers als Lagerelement ist zweckmäßigerweise so getroffen, dass dieser als Schiebelagerelement und/oder als Schwenklagerelement mit dem Basiskörper zusammenwirkt, dergestalt, dass der Basiskörper sich bei der Bewegung zwischen der Nichtgebrauchsstellung und der Stützstellung um den Querträger verschiebt und/oder an diesem verschieblich gelagert ist. Somit definiert also das Schwenklagerelement beziehungsweise der Querträger eine Art Schwenkachse und/oder Schiebeachse.

In diesem Zusammenhang ist es besonders vorteilhaft, wenn der Querträger als eine Art Rohr oder Rundstab ausgestaltet ist.

An mindestens einem der Tragprofile ist zweckmäßigerweise in einem Abstand zu dem Querträger ein Anschlag, insbesondere ein Vertikalanschlag, angeordnet, an dem die Stütze, beispielsweise deren Basiskörper oder auch ein davon abstehendes Bauteil, in der Stützstellung anschlägt. Es versteht sich, dass zweckmäßigerweise an jedem der Tragprofile ein Anschlag, insbesondere ein Vertikalanschlag, vorgesehen ist. Weiterhin kann auch eine Führungsfläche oder Kulisse an einem der Tragprofile vorgesehen sein, mit der die Stütze aus einer bei Gebrauch im Wesentlichen vertikalen Position in eine für den Nichtgebrauch geeignete horizontale Position geführt ist.

Der oder die Anschläge, vorteilhaft Vertikalanschläge, können selbstverständlich nicht nur unmittelbar am Tragprofil vorgesehen sein, sondern auch an einem mit dem Tragprofil verbundenen Bauteil, beispielsweise einem Führungskörper oder Haltekörper. Dieser letztgenannte Körper ist zweckmäßigerweise fest mit dem Tragprofil verbunden, was zu einem festen Halt beiträgt.

Die Stütze, beispielsweise der Basiskörper, ist zweckmäßigerweise in der Stützstellung zwischen dem Anschlag, z.B. dem Vertikalanschlag oder einem schräg zur Vertikalen verlaufenden Anschlag, und dem Querträger gehalten. Mithin ist also die Stütze einerseits am Vertikalanschlag und andererseits am Querträger festgelegt, was einen stabilen Halt darstellt.

Vorteilhaft ist es also vorgesehen, wenn die Stütze in der Stützstellung, in der Nichtgebrauchsstellung oder einer dazwischenliegenden Stellung formschlüssig am Querträger und/oder einem Querverbinder gehalten ist beziehungsweise sich am Querträger oder dem Querverbinder abstützt, wobei der Querverbinder neben dem Querträger in einem Abstand angeordnet ist und in Richtung der Querachse verläuft.

Beispielsweise kann der Querverbinder an oder im Bereich einer Unterseite der Tragprofile verlaufen, während der Querträger an einer Oberseite angeordnet ist. Dadurch ist ein Zwischenraum vorhanden, der zweckmäßigerweise etwa der Höhe der Tragprofile entspricht, der zum einen als Bewegungsraum für die Stütze dient, zum andern aber in einer jeweiligen Endstellung oder Zwischenstellung (Stützstellung oder Nichtgebrauchsstellung) von der Stütze für einen formschlüssigen Halt genutzt wird.

Der Querverbinder oder der Querträger sind beispielsweise eine Stützbasis, ein Boden oder dergleichen für die Stütze, insbesondere deren Basiskörper. Bevorzugt ist es, wenn insbesondere der Querverbinder, aber auch möglicherweise der Querträger, die Stütze bodenseitig abstützen. Somit kann also der Querverbinder insbesondere nach vertikal unten bei Gebrauch des Lastenträgers wirkende Kräfte aufnehmen.

Bevorzugt hat der Basiskörper eine Aufnahme, in der der Querträger in der Nichtgebrauchsstellung oder der Stützstellung oder auch einer dazwischenliegenden Stellung aufgenommen ist. Es versteht sich, dass auch die umgekehrte Konfiguration getroffen sein kann, dergestalt, dass der Querträger eine Aufnahme aufweist, die zur Aufnahme des Basiskörpers in einer der vorgenannten Stellungen dient. Somit kann also beispielsweise mit der Aufnahme ein formschlüssiger Halt der Stütze am Querträger realisiert sein. Weiterhin kann die Aufnahme auch als eine Führungs- oder Halteaufnahme ausgestaltet sein.

Die Aufnahme ist zweckmäßigerweise als eine eine Schwenkbewegung zulassende Schwenklageraufnahme und/oder eine Schiebebewegung zulassende Schiebelageraufnahme ausgestaltet. Beispielsweise ist die Aufnahme als eine Schwenkschiebenut ausgestaltet, hat also eine ausreichende Tiefe, so dass zum einen das vorgenannte Schwenken, zum andern eine Schiebebewegung beim Aufstellen beziehungsweise Zurückverstellen der Stütze in den Zwischenraum gegeben ist. Ein zusätzlicher Nutzen der Aufnahme ist dadurch erzielt, wenn sie beispielsweise den Basiskörper oder ein sonstiges Bauteil der Stütze in Richtung der Längsachse abstützt, wenn die Stütze die Stützstellung oder Gebrauchsstellung einnimmt.

Die Stütze umfasst z.B. eine Art Rohrprofil. Vorzugsweise ist die Stütze aus Metall. Beim Basiskörper ist Kunststoff zweckmäßig, aber auch Metall möglich. Ferner können die Stütze und/oder der Basiskörper zumindest abschnittsweise kunststoffummantelt sein.

Die Stütze hat zweckmäßigerweise einen ersten und einen zweiten Tragarm, die insbesondere Seitenschenkel eines U-förmigen Bügels bilden, jedenfalls vor den Basiskörper vorstehen. Die Tragarme (es könnte auch nur ein Tragarm vorgesehen sein) sind also in der Nichtgebrauchsstellung sozusagen flachgelegt und befinden sich im Zwischenraum zwischen den Tragprofilen oder stehen jedenfalls nicht wesentlich daraus hervor, erstrecken sich jedoch in der Gebrauchsstellung oder Stützstellung aus dem Zwischenraum heraus, stehen jedenfalls vor die Tragprofile vor. Bevorzugt ist hierbei eine im Wesentlichen vertikale Stellung der Stütze in der Stütz- oder Gebrauchsstellung.

Die Stütze kann auch ausziehbar oder teleskopierbar sein.

Es versteht sich, dass die Stütze in der Gebrauchsstellung zweckmäßigerweise fixierbar ist. Hierfür ist eine Fixiereinrichtung zum Fixieren der Stütze in der Stützstellung oder auch der Gebrauchsstellung vorhanden. Zwar kann man beispielsweise auch durch ein Verklemmen, Verschrauben oder Einstecken der Stütze in eine Steck-Aufnahme eine Fixierung für die Stützstellung oder die Gebrauchsstellung erzielen, wofür dann am Lastenträger Klemmmittel und/oder Schraubmittel und/oder Steckmittel vorgesehen sind. Bevorzugt ist es jedoch, wenn mindestens ein beweglicher Fixiervorsprung an der Stütze oder den Tragprofilen vorgesehen ist, der in eine korrespondierende Fixieraufnahme an der Stütze oder dem Tragegestell eingreift, wenn die Fixiereinrichtung in der Fixierstellung ist.

Bevorzugt ist der Fixiervorsprung federnd oder federbelastet. So kann der Fixiervorsprung beispielsweise einen in Richtung der Fixierstellung federnden oder federbelasteten Rasthaken aufweisen. Aber auch ein Fixierbolzenkörper oder mehrere Fixierbolzenkörper, der oder die zweckmäßigerweise in die Fixierstellung federbelastet sind, wie beim Ausführungsbeispiel der Fall, sind vorteilhaft.

Es versteht sich, dass der oder die Fixiervorsprünge an verschiedenen Stellen vorgesehen sein können. So kann beispielsweise vorgesehen sein, dass zwei Fixiervorsprünge vorhanden sind, die in an den einander gegenüberliegenden Tragprofilen vorgesehene Fixieraufnahmen eingreifen. Es ist aber auch möglich, dass sozusagen eine zentrale oder in einem Querbereich zwischen den Tragprofilen vorgesehene Fixierung realisiert ist. So ist beispielsweise mindestens ein Fixiervorsprung zwischen den Tragprofilen angeordnet und greift in eine dort vorgesehene Fixieraufnahme am Querträger oder in einen die Tragprofile quer verbindenden Querverbinder ein. Es versteht sich, dass auch umgekehrt an dem Querträger oder dem Querverbinder ein Fixiervorsprung vorgesehen sein kann, der seinerseits wiederum in die Fixieraufnahme der Stütze im Bereich des Querabstandes zwischen den Tragprofilen eingreift.

Es ist zwar möglich, dass ein Fixiervorsprung direkt betätigt wird, beispielsweise durch manuellen Eingriff. Auch eine motorische Betätigung der Fixierung oder des Lösens der Fixierung ist denkbar. So kann beispielsweise ein Lösemagnet für die Fixiervorrichtung vorgesehen sein, während in die Fixierstellung eine Feder oder eine Federbelastung oder eine federnde Ausgestaltung des Fixiervorsprungs wirkt. In allen vorgenannten Fällen ist es jedoch zweckmäßig, wenn ein Betätigungsgetriebe, beispielsweise ein Keilgetriebe, Zahngetriebe oder Seilgetriebe, vorgesehen ist, mit dem der oder die Fixiervorsprünge in die Fixierstellung oder aus der Fixierstellung heraus betätigbar sind. Insbesondere dann, wenn mehrere Fixiervorsprünge vorgesehen sind, betätigt das Betätigungsgetriebe zweckmäßigerweise alle Fixiervorsprünge in die jeweilige Stellung. Dies kann beispielsweise durch ein Koppelgetriebe realisiert sein.

Eine bevorzugte Ausführungsform sieht vor, dass der Fixiervorsprung oder die Fixieraufnahme am Basiskörper vorgesehen sind.

Die Stütze ist zwischen der Stützstellung und der Nichtgebrauchsstellung zweckmäßigerweise durch eine z.B. schräg verlaufende Kulissenbahn geführt. Die Kulisse ist zweckmäßigerweise an den Tragprofilen angeordnet, während der Kulissenfolger an der Stütze vorgesehen ist. Es versteht sich, dass auch die Kulisse an der Stütze prinzipiell anordenbar ist. Die Kulissenbahn kann beispielsweise durch eine Kulissennut gebildet sein. Beim Ausführungsbeispiel ist jedoch eine sozusagen offene Kulissenbahn realisiert, auf der der Kulissenfolger oberseitig aufliegt. Dies ermöglicht eine besonders einfache Montage und Demontage und verhindert zudem ein Verklemmen der Stütze am Tragegestell.

Wie bereits eingangs erwähnt, gibt es sowohl Lastenträger, die feste Bestandteile des Kraftfahrzeuges sind, als auch Lastenträger, die lösbar an demselben befestigbar sind, beispielsweise an einer Anhängekupplung. Für den letzteren Fall hat der erfindungsgemäße Lastenträger beispielsweise eine Kupplungsvorrichtung zur Ankopplung an eine Anhängekupplung des Zugfahrzeuges oder eine sonstige Befestigungseinrichtung des Kraftfahrzeuges.

Bevorzugt ist eine Ausführungsform dergestalt, dass das Tragegestell des Lastenträgers Bestandteil eines Schlittens ist, der in einer Schlitten-Führungsbasis zwischen einer Ruhestellung und einer Gebrauchsstellung, beispielsweise entlang einer Längsachse, verstellbar geführte Läuferschienen aufweist, wobei der Schlitten in der Gebrauchsstellung weiter als in der Ruhestellung vor die Schlitten-Führungsbasis vorsteht. Die Tragprofile bilden beispielsweise die Läuferschiene oder sind daran angeordnet. Dieser Schlitten kann beispielsweise lösbar am Kraftfahrzeug befestigt sein. Bevorzugt ist jedoch die Führungsbasis fest am Fahrzeug montiert, beispielsweise in einer schubladenartigen Ausnehmung des Kraftfahrzeuges.

Vorteilhaft hat das Tragprofil oder mindestens eine Führungsschiene und/oder mindestens eine Läuferschiene des Lastenträgers einen Grundschenkel und einen zu dem Grundschenkel winkeligen Seitenschenkel. Insbesondere ist das Tragprofil an einer Läuferschiene eines Schlittens angeordnet oder dadurch gebildet. Es ist auch vorteilhaft, wenn an dem Grundschenkel und/oder dem Seitenschenkel mindestens eine sich in Richtung der Längsachse erstreckende Verstärkungsrippe angeordnet ist.

Vorteilhaft ist an einer zu dem Stützschenkel entgegengesetzten, in Richtung der Längsachse verlaufenden Längsseite des Auflagerschenkels ein Verstärkungsschenkel angeordnet, der von dem Auflagerschenkel in Richtung zu dem Stützschenkel hin winkelig absteht, wobei der Verstärkungsschenkel quer zu der Längsachse kürzer als der Stützschenkel ist, so dass unterhalb des Verstärkungsschenkels, neben dem Stützschenkel, ein Freiraum vorhanden ist.

Der Verstärkungsschenkel erstreckt sich zweckmäßigerweise über mindestens eine Längslänge, in der die Führungsschiene von der zugeordneten Läuferschiene des Schlittens in der Gebrauchsstellung und/oder der Ruhestellung überdeckt wird. Vorteilhaft ist der Verstärkungsschenkel über die gesamte Längslänge der Führungsschiene vorgesehen, so dass diese insgesamt eine stabile, belastbare Konstruktion darstellt. Außerdem wird dadurch die Fertigung erleichtert. Es genügt allerdings, den Verstärkungsschenkel insbesondere in demjenigen Bereich vorzusehen, wo die Führungsschiene besonders belastet wird, beispielsweise im Wesentlichen im Bereich der Überdeckung durch die Läuferschiene in der Gebrauchsstellung.

Der Verstärkungsschenkel und/oder die Verstärkungsrippe erstreckt sich zweckmäßigerweise über mindestens eine Längslänge, in der die Führungsschiene von der zugeordneten Läuferschiene des Schlittens in der Gebrauchsstellung und/oder der Ruhestellung überdeckt wird oder umgekehrt. Vorteilhaft ist der Verstärkungsschenkel über die gesamte Längslänge der Führungsschiene oder Läuferschiene vorgesehen, so dass diese insgesamt eine stabile, belastbare Konstruktion darstellt.

Ein Vorteil ist es, durch eine Verstärkungsrippe eine zumindest partielle Verstärkung der jeweiligen Schiene (Läuferschiene oder Führungsschiene) oder eines Tragprofils zu erreichen. Die Verstärkungsrippe erstreckt sich zweckmäßigerweise über die gesamte Längserstreckungsrichtung der Läuferschiene oder der Führungsschiene bzw. des Tragprofils, insbesondere dort, wo sich die Läuferschiene und die Führungsschiene überdecken, insbesondere miteinander verspannt werden. Aber auch an einem freien Ende einer jeweiligen Läuferschiene oder Führungsschiene oder einem Tragprofil, das heißt dort, wo der Schlitten relativ weit vor das Heck des Kraftfahrzeuges vorsteht und/oder wo die erfindungsgemäße Stütze in der Stützstellung angeordnet ist, können große Belastungen auftreten, wobei sich die Verstärkungsrippe oder eine Verstärkungsrippenstruktur als vorteilhaft erweist.

Die Verstärkungsrippe weist zweckmäßigerweise zwei einander gegenüberliegende Vorsprungschenkel auf, die vor den Seitenschenkel vorstehen, wobei die Vorsprungschenkel parallel zum Grundschenkel der jeweiligen Schiene oder des Tragprofils verlaufen. Auch die umgekehrte Konfiguration ist möglich, dass nämlich die Vorsprungschenkel am Grundschenkel angeordnet sind und parallel zum Seitenschenkel verlaufen. Der Seitenschenkel und der Grundschenkel sind zweckmäßigerweise zueinander rechtwinkelig.

Bevorzugt ist eine Halteeinrichtung vorgesehen, die in einer Haltestellung den Schlitten in mindestens einer Stellung bezüglich der Schlitten-Führungsbasis hält und in einer Freigabestellung den Schlitten zu einer Verstellung bezüglich der Schlitten-Führungsbasis freigibt. Das Halteglied kann zweckmäßigerweise in der Haltestellung zu einem Verspannen des Schlittens bezüglich der Schlitten-Führungsbasis beitragen: Das mindestens eine Halteglied übt zweckmäßigerweise in der Haltestellung eine Spannkraft auf den Schlitten quer zu der Längsachse, beispielsweise horizontal, aus. Damit wird der Schlitten quasi gegen die Führungsbasis gedrückt oder gezogen, mithin also verspannt.

Wenn die Halteeinrichtung den Schlitten freigibt, kann dieser beispielsweise von Hand verstellt werden, um die Haltestellung und/oder die Freigabestellung zu erreichen. Aber auch ein insbesondere elektrischer oder fluidtechnischer Antriebsmotor zum Verstellen des Schlittens ist vorteilhaft. Das mindestens eine Halteglied ist vorteilhaft durch eine Federanordnung in die Haltestellung federbelastet.

Die Halteeinrichtung weist zweckmäßigerweise einen mit einem Antriebsschalter schaltbaren elektrischen oder fluidischen, also motorischen, Halteantrieb zum Verstellen des mindestens einen Halteglieds in die Haltestellung und/oder die Freigabestellung auf. Es ist aber auch möglich, dass das mindestens eine Halteglied manuell oder über einen manuell betätigbaren Halteantrieb verstellbar ist. Weiter kann der motorische oder manuelle Halteantrieb über ein Getriebe auf das Halteglied wirken, das auch zweckmäßigerweise einen Bestandteil des Halteantriebs bilden kann.

Der Lastenträger weist zweckmäßigerweise eine den Schlitten in die Gebrauchsstellung belastende Auswurf-Federanordnung auf. Es kann auch ein Schlittenantrieb mit beispielsweise einem elektrischen und/oder fluidtechnischen Motor zum Verstellen des Schlittens bezüglich der Schlitten-Führungsbasis vorgesehen sein.

Es versteht sich, dass die oben beschriebenen Merkmale, z.B. bezüglich des Tragprofils, der Führungsschienen und Läuferschienen sowie der Stütze und deren Halterung und Führung nicht nur an einem Lastenträger vorteilhaft sind, der an einem Kraftfahrzeug fest montiert ist, sozusagen einen Bestandteil desselben bildet, sondern auch bei einem Lastenträger zweckmäßig sind, der lösbar an einem Kraftfahrzeug befestigbar ist, z.B. an einer Anhängekupplung des Kraftfahrzeugs.

Nachfolgend werden Ausführungsbeispiele der Erfindung anhand der Zeichnung dargestellt. Es zeigen:
- Figur 1: eine schematische Schrägansicht eines Lastenträgers in Gebrauchsstellung, der in ein Heck eines in
- Figur 2: von hinten schematisch dargestellten Kraftfahrzeuges einfahrbar und aus diesem ausfahrbar ist,
- Figur 3a: eine teilweise schematische Querschnittsansicht des Lastenträgers gemäß Figur 1 mit einer Halteeinrichtung gemäß einer ersten Ausführungsform,
- Figur 3b: eine Anordnung ähnlich wie Figur 3a, jedoch mit einer Halteeinrichtung in einer zweiten Ausführungsform,
- Figur 4: den Lastenträger gemäß Figur 1 von schräg oben,
- Figur 5: den Lastenträger gemäß Figur 1 von seiner Heckseite her gesehen in Ruhestellung bzw. Packstellung,
- Figur 6a: die Stütze des Lastenträgers gemäß Figur 1 in Stützstellung,
- Figur 6b: die Ansicht gemäß Figur 6a, jedoch mit teilweise geöffnetem Basiskörper der Stütze,
- Figur 6c: die Stütze gemäß Figur 6a, teilweise in Richtung der Nichtgebrauchsstellung geschwenkt, die in
- Figur 6d: erreicht ist,
- Figur 7a: ein zweites Ausführungsbeispiel einer erfindungsgemäß ausgestalteten Stütze in Stützstellung, die in
- Figur 7b: ein Stück weit und in
- Figur 7c: noch weiter in die in
- Figur 7d: dargestellte Nichtgebrauchsstellung verstellt ist.

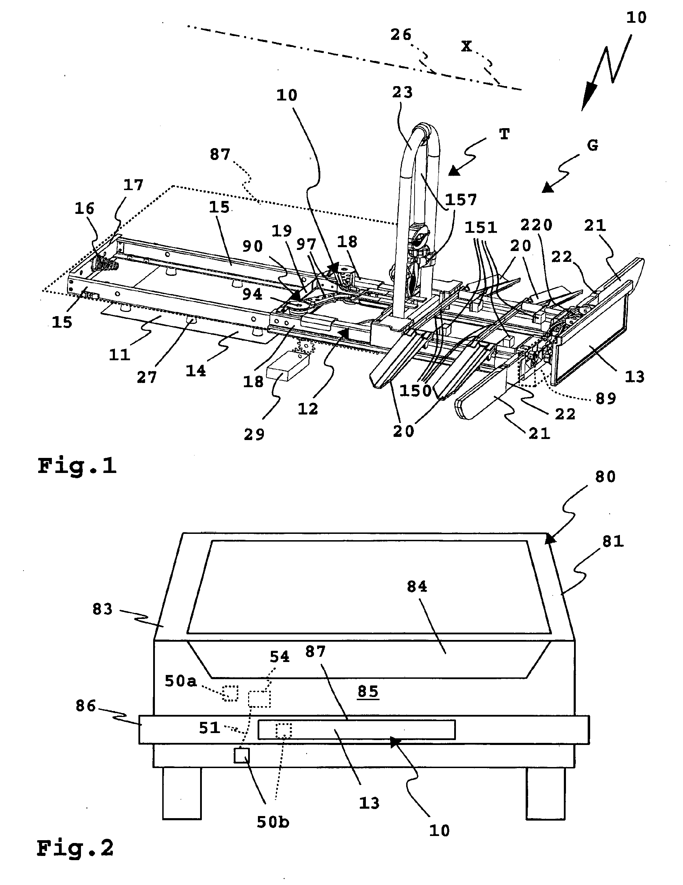

Ein Kraftfahrzeug 80, z.B. ein PKW, hat eine Karosserie 81 und ist durch einen Antriebsmotor, beispielsweise einen Elektro- oder Verbrennungsmotor, antreibbar. An einem Heck 83 der Karosserie 81 befindet sich unter einem Deckel 84 ein Gepäckabteil 85 sowie ein Heckstoßfänger 86. Das Kraftfahrzeug 80 ist beispielsweise ein Personenkraftwagen. Im Bereich des Heckstoßfängers 86 ist weiterhin eine Lastenträgeraufnahme 87 für einen Lastenträger 10, der in Figur 1 detaillierter dargestellt ist, vorgesehen. Die Lastenträgeraufnahme 87 ist eine Art Tasche oder Ausnehmung, in der eine Schlitten-Führungsbasis 11 des Lastenträgers 10, angeordnet ist. An der Schlitten-Führungsbasis 11 ist ein Schlitten 12 längsverschieblich entlang einer Längsachse 26 geführt, so dass er zwischen einer Gebrauchsstellung G (ausgezogen dargestellt), in der er vor das Heck 83 des Kraftfahrzeugs 80 vorsteht und mit einer Last beladbar ist, und einer Ruhestellung R (gestrichelt angedeutet) verstellbar ist, wobei der Schlitten 12 in der Ruhestellung R in einem Innenraum bzw. in der Lastenträgeraufnahme 87 aufgenommen ist, so dass er nicht vor das Heck 83 vorsteht.

Die Schlitten-Führungsbasis 11 weist vorliegend eine Halteplatte 14 auf, an deren Oberseite Führungsschienen 15 angeordnet sind, die zueinander parallel sind. Die Führungsschienen 15 sind zweckmäßigerweise auf Stützen 27 angeordnet, könnten aber auch unmittelbar auf der Halteplatte 14 oder an einem Karosseriebauteil des Kraftfahrzeugs 80 befestigt sein. Es versteht sich, dass die Halteplatte 14 nur beispielhaft für eine Befestigungseinrichtung steht, mit der die Führungsschienen 15 am Kraftfahrzeug 80 befestigbar sind.

Ein etwa am Boden bzw. in Fahrtrichtung des Kraftfahrzeugs 80 vorn gelegener Endbereich der Führungsschienen 15 ist durch einen Querträger 16 verbunden, so dass insgesamt durch die Führungsschienen 15 und den Querträger 16 eine U-förmige Anordnung getroffen ist. Ein weiterer (nicht sichtbarer) Querträger verbindet die Führungsschienen 15 in einem Längsabstand zum Querträger 16, vorzugsweise in der Nähe des anderen Endbereichs der Führungsschienen 15. Der nicht sichtbare Querträger ist mit den Führungsschienen 15 an deren Unterseite verbunden. Der Querträger 16 hingegen bildet eine Stirnwand der Schlitten-Führungsbasis 11.

Vor dem Querträger 16 steht eine Auswurf-Feder 17 in Richtung des Schlittens 12 vor, die den Schlitten 12 in seiner Ruhestellung R in Richtung der Gebrauchsstellung G beaufschlagt.

Es ist aber auch möglich, dass ein elektrischer und/oder fluidtechnischer Schlittenantrieb zum Verstellen des Schlittens 12 in seine Ruhestellung R und/oder in Richtung der Gebrauchsstellung G vorgesehen ist, z.B. ein Riemen- oder Seilantrieb, ein pneumatischer, insbesondere doppeltwirkender Zylinder, ein Elektromotor oder dergleichen. Beispielsweise ist als ein Schlittenantrieb 29 ein Elektromotor vorgesehen, der die Läuferschienen 18 antreibt, z.B. mit einem Antriebsritzel mit an den Läuferschienen 18 angeordneten Zahnungen kämmt.

Der Schlitten 12 hat eine in Draufsicht im Wesentlichen rechteckige Gestalt. Dabei werden zwei Längsseiten dieses Rechteckes von Läuferschienen 18 gebildet, die an den Führungsschienen 15 geführt und längsverschieblich sind. Die Läuferschienen 18 sind auf der dem Querträger 16 zugewandten Seite durch einen Querträger 19 miteinander verbunden, auf den die Auswurf-Feder 17 in der Ruhestellung R wirkt. Am heckseitigen Ende des Schlittens 12, d.h. entgegengesetzt zum Querträger 19, befindet sich ein Funktionsträger 210, der die Läuferschienen 18 miteinander verbindet.

Der Schlitten 12 bildet eine Tragbasis 218 zum Auflegen von Lasten, beim Ausführungsbeispiel Fahrrädern. Diese sind auf Trägerrinnen 20 aufstellbar, die schwenkbeweglich an den Läuferschienen 18 gelagert sind. Zur Befestigung von beispielsweise Fahrrädern an den Trägerrinnen sind flexible Riemen 150 und vorteilhaft mit Ratschen versehene Halter 151 vorgesehen.

Die Trägerrinnen 20 können zwischen die Läuferschienen 18 in eine Nichtgebrauchsstellung geschwenkt werden, in der der Schlitten 12 in Richtung der Schlitten-Führungsbasis 11, d.h. in die Ruhestellung R, verstellbar ist. Zu diesem Zweck werden auch Leuchten 21, die beispielsweise Bremslichter, Blinker, Rückfahrscheinwerfer und dergleichen umfassen, in Richtung der Läuferschienen 18 geschwenkt, wofür Schwenklager 22 zwischen dem Funktionsträger 210 und den Leuchten 21 vorgesehen sind. Weiter ist ein Kennzeichenträger 13 am Funktionsträger 210 schwenkbar gelagert.

Weiterhin ist es möglich, zum Verstellen des Schlittens 12 in die Ruhestellung R eine Stütze 23, vorteilhaft in Gestalt eines U-Bügels, in einen Zwischenraum 160 zwischen die Läuferschienen 18 zu schwenken. Dann ist also auch die Stütze 23 platzsparend untergebracht, so dass der Schlitten 12 in die Lastenträgeraufnahme 87 passt.

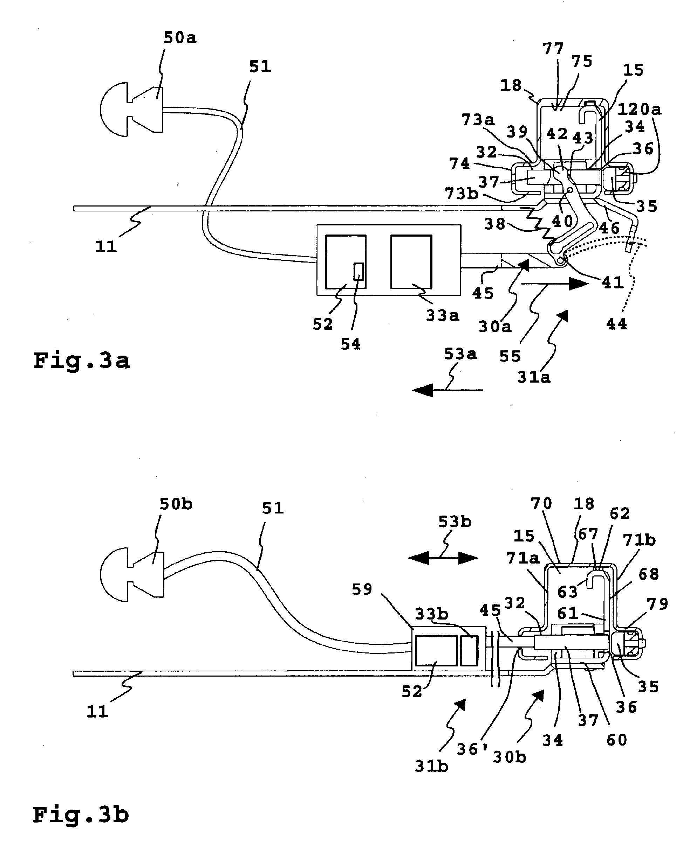

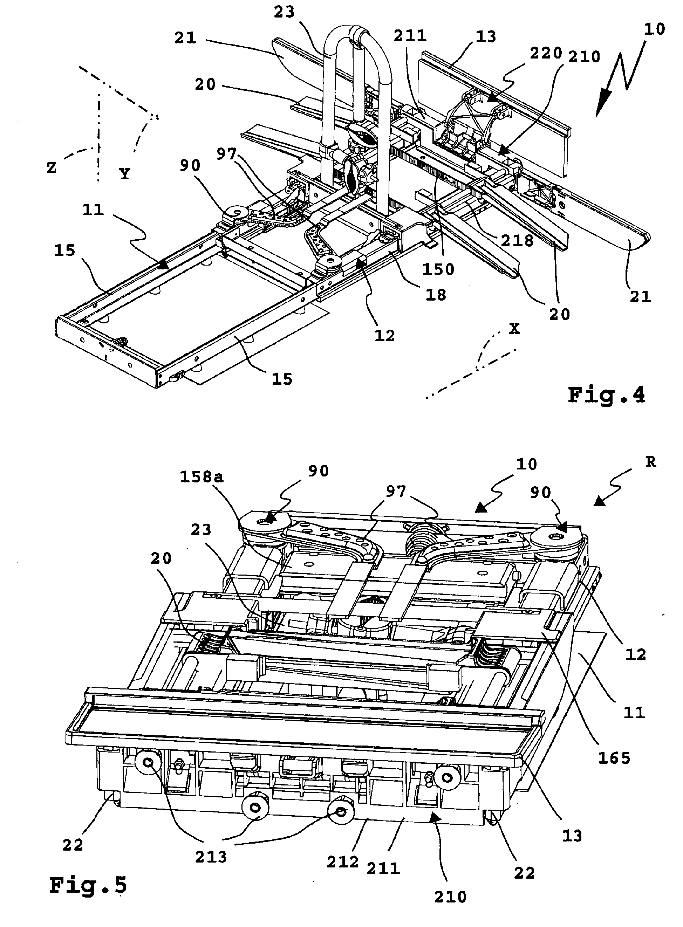

Zum Halten des Schlittens 12 in der Gebrauchsstellung G und/oder der Ruhestellung R sind beispielhaft in den Figuren 3 und 4 dargestellte Halteeinrichtungen 30a, 30b vorgesehen. Die Halteeinrichtungen 30a, 30b sind vorliegend als Verriegelungseinrichtung 31a, 31b ausgestaltet und haben als Halteglieder 37 dienende Riegel 32, die durch elektrische Halteantriebe 33a, 33b betätigbar sind. Die Halteglieder 37 oder Riegel 32 sind an Lagern 34 schiebebeweglich zwischen einer Haltestellung oder Verriegelungsstellung, in der sie in Halteaufnahmen 35 des Schlittens 12 eingreifen, und einer Freigabestellung (in Figuren 3 und 4 dargestellt) verstellbar, in der die Riegel 32 außer Eingriff mit den Halteaufnahmen 35 sind, so dass der Schlitten 12 bezüglich der Schlitten-Führungsbasis 11 längsverschieblich ist, z.B. zum Verstauen in der Lastenträgeraufnahme 87.

Die Riegel 32 sind quer zur Auszugsrichtung bzw. Laufrichtung des Schlittens 12 bezüglich der Schlitten-Führungsbasis 11 angeordnet und vorliegend als eine Art Stift ausgestaltet. Die Riegel 32 bilden Halteglieder 37 zum ortsfesten Halten des Schlittens 12 bezüglich der Schlitten-Führungsbasis 11 bzw. des Kraftfahrzeuges 80.

Der Riegel 32 wirkt mit einem Seitenschenkel der Läuferschiene 18 in der Verriegelungsstellung zusammen, z.B. in der Haltestellung in eine dort angeordnete Halteaufnahme 35 eingreift. Der Riegel 32 greift in der Verriegelungsstellung oder Haltestellung zweckmäßigerweise nicht nur in die Halteaufnahme 35 ein, sondern durchgreift auch eine in der Ruhestellung R oder der Gebrauchsstellung G mit der Halteaufnahme 35 fluchtende Halteaufnahme 36 an der Führungsschiene 15. Dadurch sind die Schienen 15, 18 gegeneinander in Auszugsrichtung des Schlittens 12 bezüglich der Schlitten-Führungsbasis 11 verriegelt.

Der Riegel 32 der Halteeinrichtung 30b kann in der Lösestellung ganz aus der Läuferschiene 18 heraus verstellt werden (in Figur 4 nach links). Alternativ kann eine der Halteaufnahme 36 gegenüberliegende Halteaufnahme 36' auch als Langloch ausgestaltet sein.

Der Riegel 32 wird durch eine Feder 38 in seine Verriegelungsstellung oder Haltestellung belastet. Die Feder 38 ist einerseits an der Schlitten-Führungsbasis 11 und andererseits an einem Betätigungshebel 39 befestigt, der den Riegel 32 betätigt. Der Betätigungshebel 39 ist schwenkbeweglich an einem Schwenklager 40 gelagert. Die Feder 38 sowie der Halteantrieb 33a greifen an einem Betätigungsende 41 des vorliegend winkeligen Betätigungshebels 39 an. Der Betätigungshebel 39 hat neben dem Betätigungsende 41 ein Wirkende 42, das in eine Aufnahme 43 des Riegels 32 eingreift. Das Wirkende 42 und das Betätigungsende 41 sind an einander entgegengesetzten Seiten bezüglich des Schwenklagers 40 angeordnet. Wird der Betätigungshebel 39 um das Schwenklager 40 geschwenkt, nimmt er den Riegel 32 in die Verriegelungsstellung oder die Entriegelungsstellung bzw. Freigabestellung mit.

Während ein Abtrieb 45 des Halteantriebs 33a am Betätigungsende 41 des Betätigungshebels 39 angreift, dort zweckmäßigerweise schwenkbeweglich gelagert ist, und nur in Richtung einer Verstellung (Pfeil 53a) des Riegels 32 in die Freigabestellung wirksam ist (in Gegenrichtung wirkt die Feder 38), betätigt ein Abtrieb 45 des Halteantriebs 33b den Riegel 32 sowohl in die Haltestellung oder Verriegelungsstellung als auch in die Freigabestellung (Pfeil 53b), die in Figur 4 dargestellt ist.

Das Halteglied 37 wirkt mit einer Halte- oder Spannkraft auf einen Distanzkörper 110a, der somit also ein Widerlager für das Halteglied 37 bildet.

Zweckmäßigerweise hat eine motorische Halteeinrichtung eines erfindungsgemäßen Lastenträgers eine manuell betätigbare Notbetätigung, z.B. einen Bowdenzug, der auf das Halteglied wirkt. Schematisch ist eine auf den Betätigungshebel 39 wirkende Notbetätigung 44 in Figur 3 eingezeichnet. Die Notbetätigung 44 ist zweckmäßigerweise an einem Halter 46 befestigt. Die Notbetätigung 44 steht beispielhaft für eine ebenfalls mögliche rein manuelle Ent- und/oder Verriegelung.

Die Halteantriebe 33a, 33b lassen sich durch Antriebsschalter 50a, 50b bequem betätigen. Die Antriebsschalter 50a, 50b sind frei am Kraftfahrzeug 80 positionierbar, beispielsweise am Heck 83. Die Antriebsschalter 50a, 50b sind vorliegend elektrische Schalter, die über Leitungen 51 mit einer zweckmäßigerweise eine Funktionsanzeigeeinrichtung 54 aufweisende Steuerung 52 verbunden sind, die ihrerseits wiederum die Halteantriebe 33a, 33b zu einer unidirektionalen Antriebsbewegung bzw. Entriegelungsbewegung 53a oder bidirektionalen Antriebsbewegung oder Ent- und Verriegelungsbewegung 53b ansteuert. Beispielsweise ist der Antriebsschalter 50a im Gepäckabteil 85 angeordnet. Der Antriebsschalter 50b hingegen ist unmittelbar in der Nähe des Lastenträgers 10, d.h. am Heck 83 und/oder dem Lastenträger 10 in einem Außenbereich des Kraftfahrzeuges 80 positioniert.

Die Führungsschienen 15 tragen und führen die bezüglich der Schlitten-Führungsbasis 11 sozusagen ausziehbaren Läuferschienen 18, die man daher auch als Auszugsprofile bezeichnen kann. Jedenfalls sind die Führungsschienen 15 und die Läuferschienen 18 jeweils einstückig, wobei ihre Querkontur durch Umkanten, Umfalzen oder Umbiegen einzelner Abschnitte eines Grundkörpers beziehungsweise Ausgangsmaterials gebildet ist, zweckmäßigerweise einer Stahlplatte (als Grundkörper).

Die Führungsschienen 15 sind mit einem Befestigungsschenkel 60 auf der Halteplatte 14, die somit auch eine Bodenplatte bildet, befestigt. Von dem Befestigungsschenkel 60 steht ein Stützschenkel 61 winkelig ab, vorliegend rechtwinkelig, zweckmäßigerweise L-förmig. Sozusagen als Lauffläche oder Lagerfläche für den Schlitten 12 steht ein Auflagerschenkel 62 zur Verfügung, der winkelig, vorteilhaft rechtwinkelig, vom Stützschenkel 61 absteht. Der Auflagerschenkel 62 und der Befestigungsschenkel 60 verlaufen im Wesentlichen parallel zueinander. Vom Auflagerschenkel 62 steht weiterhin ein Verstärkungsschenkel 63 winkelig ab, vorteilhaft rechtwinkelig.

Eine freie Oberseite der Führungsschiene 15 dient zum Auflegen und Lagern der Läuferschiene 18, das heißt, die Außenseite des Auflagerschenkels 62 bildet eine Lagerfläche 67. An der vom Verstärkungsschenkel 63 abgewandten Seite hat der Stützschenkel 61 weiterhin eine Führungsfläche 68 zum seitlichen Führen der Läuferschiene 18.

Die Läuferschienen 18 sind an den Führungsschienen 15 gelagert und auf diese aufgelegt. Sie begrenzen einen im Wesentlichen U-förmigen Innenraum 75. Die Läuferschienen 18 haben eine Hut- oder Omega-förmige Gestalt. Die Läuferschienen 18 weisen einen Grundschenkel 70 auf, von dem Seitenschenkel 71a, 71b winkelig, vorliegend rechtwinkelig, abstehen. Insofern wird also dadurch eine U-förmige Querschnittskontur gebildet. Der Grundschenkel 70 bildet zudem einen Lagerschenkel zum Lagern der Läuferschienen 18 auf den Führungsschienen 15. Die Lagerflächen 67, 77 könnten beispielsweise mit einer Gleitbeschichtung oder mit Gleitstücken versehen sein. Die freien Querendbereiche der Läuferschiene 18 sind mit Verstärkungsrippen 79 versehen, deren Vorsprungschenkel 73a, 73b durch eine Grundwand 74 miteinander verbunden sind. Der Vorsprungschenkel 73a steht winkelig von der Grundwand des Seitenschenkels 71 ab und verläuft parallel zum Vorsprungschenkel 73b. Die Grundwand 74 und die Seitenschenkel 71a oder 71b sind ebenfalls parallel zueinander.

Durch die Halteeinrichtungen 30a oder 30b ist ein Verriegeln und Halten des Schlittens 12 an der Schlitten-Führungsbasis 11 in der Gebrauchsstellung und/oder der Ruhestellung möglich. Eine zusätzliche Sicherheit und für den Fahrbetrieb optimale Verspannung wird durch Spanneinrichtungen 90 erreicht, die die Führungsschienen 15 und die Läuferschienen 18 jeweils miteinander verspannen. Mit Hilfe von Betätigungshebeln 97 können Zuganker 94 betätigt werden, so dass diese die Läuferschienen 18 in Richtung der Führungsschienen 15 verspannen.

Aus den obigen Ausführungen wird deutlich, dass insbesondere durch die Ausgestaltung der Profile der Führungsschienen 15 und der Läuferschienen 18, aber auch durch die entsprechende Verspannung und Verriegelung eine stabile Konstruktion realisiert ist, die, wie aus Figur 5 ersichtlich, in eine kompakte Staustellung oder Ruhestellung bringbar ist.

Die Stütze 23 umfasst einen U-förmigen Bügel, dessen Seitenschenkel Tragarme 155 bilden, die durch einen einen Grundschenkel bildenden Bogenabschnitt 156 miteinander verbunden sind. An der Stütze 23 können beispielsweise Klemmhalter 157 zum Befestigen und Klemmen von Fahrrädern oder sonstigen Lasten befestigt werden.

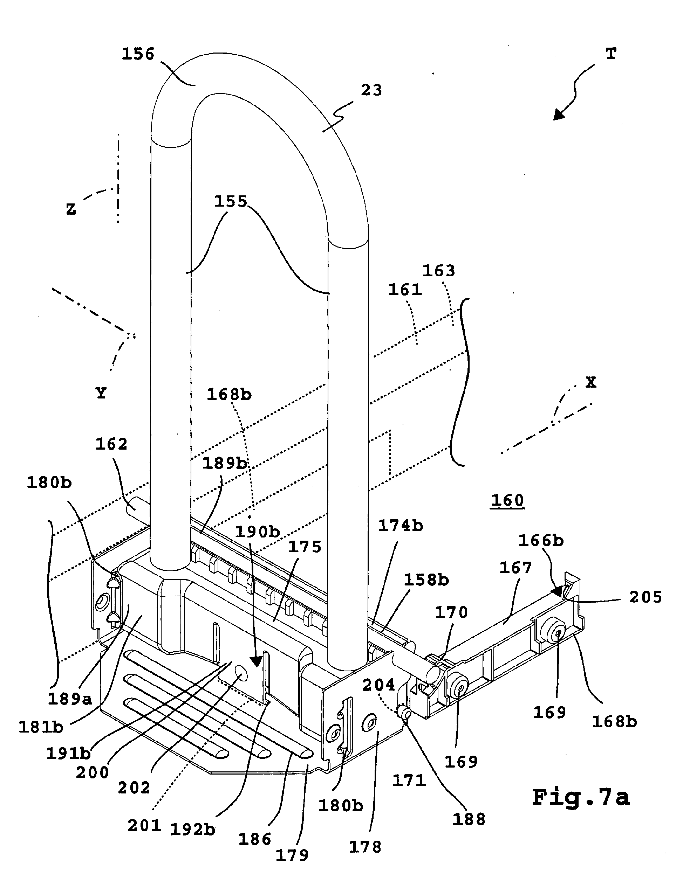

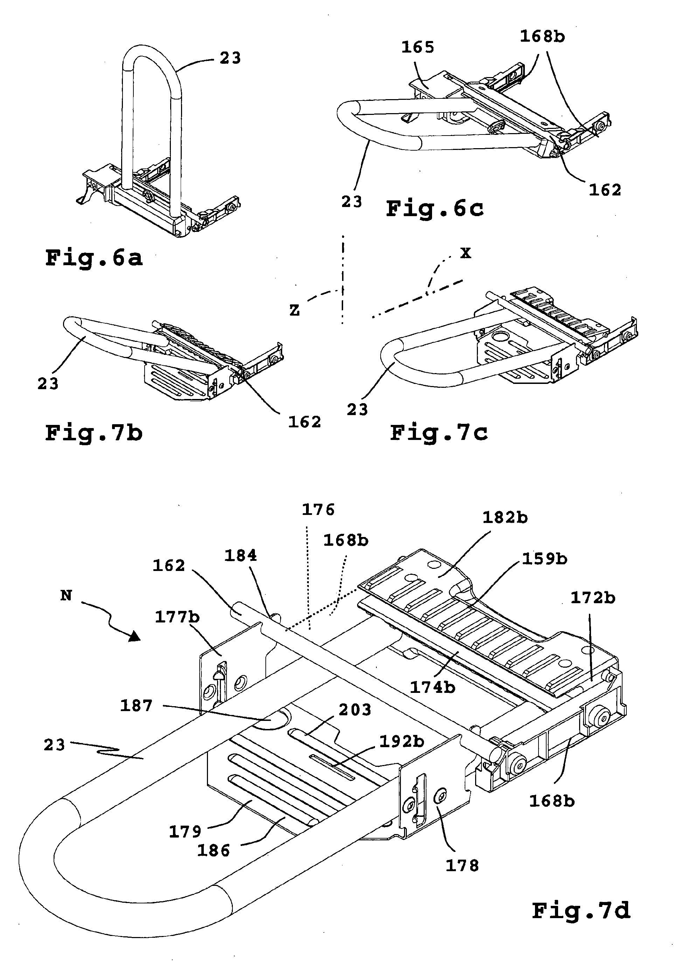

An der zum Bogenabschnitt 156 entgegengesetzten Seite sind die Tragarme 155 an einem Basiskörper 158a (Figuren 6a-6d) oder 158b (Ausführungsbeispiel gemäß Figuren 7a-7d) gehaltert. Die Basiskörper 158a, 158b haben eine balkenartige oder klotzartige Gestalt und sind beispielsweise durch Kunststoffkörper gebildet.

Zwar kann ein Basiskörper einer erfindungsgemäßen Stütze auch ein massives Bauteil sein oder auch z.B. ein Profilstab. Die Basiskörper 158a oder 158b sind jedoch in einer bevorzugten Ausführungsform im Wesentlichen hohl, z.B. durch insbesondere miteinander verschraubte und/oder verklebte Teilgehäuse 189a, 189b gebildet, so dass sie leicht sind, wobei allerdings eine Rippenstruktur 159a, 159b vorteilhaft ist. So ist beispielsweise die Rippenstruktur 159a im Innenraum des Basiskörpers 158a angeordnet, während die Rippenstruktur 159b an der Außenseite des Basiskörpers 158b vorgesehen ist. Es versteht sich, dass eine Kombination einer außen- und innenseitigen Rippenstruktur zweckmäßig ist.

In diesem Zusammenhang sei bemerkt, dass gleiche oder gleichartige Komponenten der Ausführungsbeispiele gemäß Figuren 6a-6d mit um den Buchstaben "a" ergänzten Bezugsziffern versehen sind, beim Ausführungsbeispiel gemäß Figuren 7a-7d mit um "b" ergänzten Bezugsziffern.

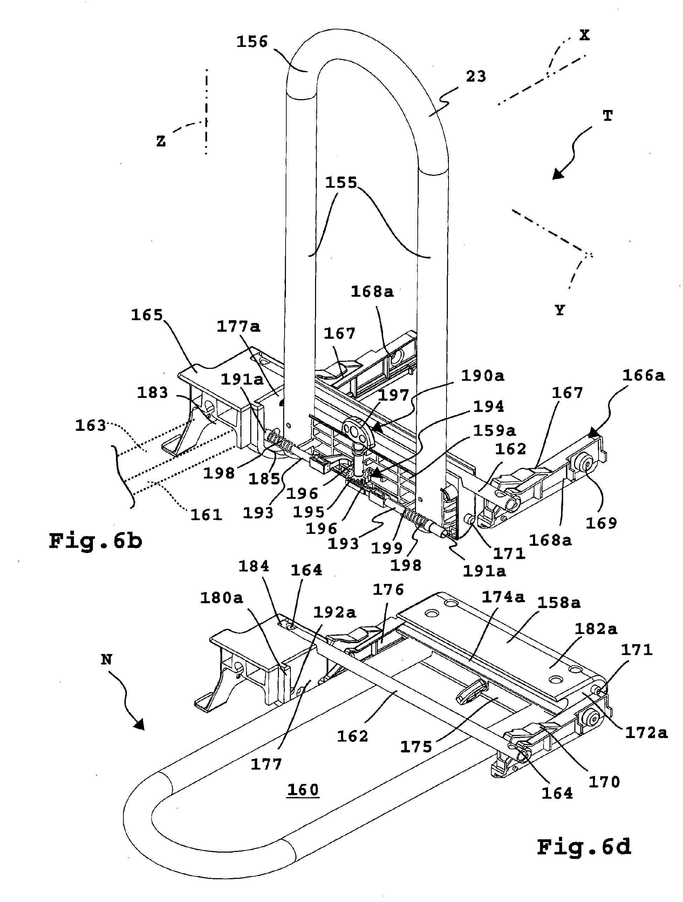

Der Basiskörper 158a, 158b ist in einem Zwischenraum 160 zwischen die Läuferschienen 18 hinein verstellbar (Figuren 6d, 7d). Der Zwischenraum 160 ist bezogen auf die X- oder Längsachse 26 durch die Läuferschienen 18 begrenzt. Die Läuferschienen 18 bilden Tragprofile 161. Vorliegend verlaufen die Läuferschienen 18 beziehungsweise Tragprofile 161 parallel zur Längsachse 26, wobei selbstverständlich ein Zwischenraum in der Art des Zwischenraums 160 auch durch zueinander schrägwinklig verlaufende Tragprofile begrenzt sein könnte (nicht dargestellt). Die Tragprofile 161 sind rückseitig durch den Querträger 19, im Bereich der Stütze 23 zusätzlich noch durch einen Querträger 162 fest verbunden, so dass das den Querträger 162 und die Tragprofile 161 umfassende Tragegestell 163 insgesamt eine hochbelastbare Struktur darstellt. Der Querträger 162 ist beispielsweise an die Tragprofile 161 angeschraubt, wobei in der Zeichnung nicht dargestellte Schrauben beispielsweise Bohrungen 164 sowie Führungskörper 165 durchdringen, die auf die Tragprofile 161 sozusagen aufgesattelt sind. Es versteht sich, dass wie beim Ausführungsbeispiel gemäß Figuren 7a-7d auch eine unmittelbare Befestigung des Querträgers 162 auf den Tragprofilen 161 möglich ist.

Nun bildet an sich der Querträger 162 ein Hindernis bei einer Bewegung der Stütze 23 aus der in den Figuren 6a, 7a dargestellten Stützstellung T, in der sie zur Befestigung einer Last geeignet ist, und einer Nichtgebrauchsstellung N, in der sich die Stütze 23 in dem Zwischenraum 160 befindet (Figuren 6d, 7d). Hier schaffen Führungseinrichtungen 166a, 166b Abhilfe:

Die Führungseinrichtungen 166a, 166b umfassen jeweils an den Innenseiten der Tragprofile 161 angeordnete Kulissen 167, die zwar prinzipiell direkt an den Tragprofilen 161 vorgesehen sein könnten, beim Ausführungsbeispiel jedoch von Kulissenkörpern 168a, 168b bereitgestellt werden. Die Kulissenkörper 168a, 168b sind beispielsweise mit den Tragprofilen 161 verschraubt. In der Zeichnung sichtbar sind beispielsweise Schraubendome 169 an den den Seitenschenkeln 71a zugeordneten Seiten der Kulissenkörper 168a, 168b. An den Oberseiten der Kulissenkörper 168a, 168b befinden sich noch Einführvorsprünge 170, die als Einführhilfen oder Gleithilfen dienen, wenn der Schlitten 12 in Richtung der Schlitten-Führungsbasis 11 und in die Lastenträgeraufnahme 87 hinein verschoben wird.

Die Kulissenkörper 168 können sich vorteilhaft an den Verstärkungsrippen 79 abstützen. So ist beispielsweise an der Läuferschiene 18 zugewandten Außenseite der Kulissenkörper 168a, 168b eine Stufe zum Eingriff für die Verstärkungsrippe 79 vorgesehen. Somit stützen sich also die Kulissenkörper 168a, 168b nicht nur an den Seitenschenkeln 71a, sondern auch an dem Vorsprungschenkel 73a sowie zweckmäßigerweise zusätzlich noch an der Grundwand 74 der Verstärkungsrippe 79 ab. Mithin werden also die Kulissenkörper 168a, 168b formschlüssig von den Läuferschienen 18 und somit den Tragprofilen 161 gehalten.

Die Kulissen 167 sind oberseitig an den Kulissenkörper 168a, 168b angeordnet, allerdings an den von den Tragprofilen 161 abgewandten Innenseiten der Kulissenkörper 168.

An den Kulissen 167 gleiten Kulissenfolger 171 entlang, die am Basiskörper 158a, 158b angeordnet sind. Die Kulissenfolger 171 werden beispielsweise durch bolzenartige Vorsprünge gebildet, die vor Stirnseiten oder Stirnwände 172 der Basiskörper 158a, 158b vorstehen.

Der Querträger 162 verläuft in einer zur Längsachse 26 (= X-Achse) rechtwinkeligen Querachse Y. Die Kulisse 167 hat nunmehr einen Schrägverlauf, derart, dass sie in einem größeren Abstand bezüglich der Längsachse 26 vom Querträger 162 etwa auf Höhe des Querträgers 162 liegt, während sie in Richtung des Querträgers 162 nach schräg unten verläuft, so dass sie unterhalb des Querträgers 162 einen Abstand in Richtung der Z-Achse hat (nach unten), so dass der Basiskörper 158a, 158b beim Verstellen aus der Nichtgebrauchsstellung N in die Gebrauchsstellung G eine Hoch-Tief-Bewegung (bezüglich der Z-Achse) durchläuft.

Die Kulissen 167 sind dabei so getroffen, dass der Querträger 162 bei einer Stellung der Stütze 23 in der Nähe der Stützstellung T beziehungsweise in der Stützstellung T in Eingriff mit einer Aufnahme 174a, 174b an der Oberseite 175 des Basiskörpers 158a, 158b gelangt. Die Aufnahme 174a, 174b ist als eine Nut ausgestaltet, die in Querrichtung beziehungsweise in Richtung der Querachse Y verläuft. Somit ist also in der Stützstellung T der Querträger 162 vollständig im Eingriff mit der Aufnahme 174a, 174b.

Die Aufnahme 174a, 174b ist als eine U-förmige Nut, die man auch als Quernut bezeichnen könnte, ausgestaltet.

Der Querträger 162 ist vorliegend als Rundrohr oder Rundstab ausgestaltet. Der Querträger 162 hat dabei eine Führungsfunktion:

Im letzten Abschnitt der Bewegung der Stütze 23 aus der Nichtgebrauchsstellung N in die Stützstellung T bildet der Querträger 162 ein Lagerelement, insbesondere eine Lagerachse, indem er nämlich in die Aufnahme 174a, 174b eingreift. Dann schwenkt der Basiskörper 158a, 158b um den Querträger 162. Bei der Aufnahme 174a sind die Maße und Abstände zur Kulisse 167 sowie auch die sonstigen Abmaße des Basiskörpers 158a so getroffen, dass der Basiskörper 158a ausschließlich um den Lagerstab beziehungsweise den Querträger 162 schwenkt. Insofern bildet die Aufnahme 174a eine Schwenklageraufnahme.

Die Aufnahme 174b hingegen erlaubt nicht nur eine Schwenkbewegung, sondern auch eine Schiebebewegung, so dass man die Aufnahme 174b auch als Schwenkschiebeaufnahme oder Schwenkschiebenut bezeichnen könnte. Die Aufnahme 174b ist nämlich wesentlich tiefer als die Aufnahme 174a, so dass die folgende Kinematik realisiert ist:

Im letzten Abschnitt der Bewegung der Stütze 23 aus der Nichtgebrauchsstellung N in die Stützstellung T greift der Querträger 162 beziehungsweise die Lagerachse verhältnismäßig tief in die Aufnahme 174b ein, so dass sie etwa am Boden der Aufnahme 174b, der ausgerundet ist, anliegt. Somit schwenkt also die Stütze 23 um den Querträger 162 (Figur 7b).

An diesen Bewegungsabschnitt schließt sich ein Schiebebewegungsabschnitt an, dergestalt, dass die Stütze 23 nach vertikal unten beziehungsweise in Richtung der Achse Z bewegt wird, so dass der Querträger 162 vom Nutboden weg in Richtung der freien Seite der Aufnahme 174b gelangt (Figur 7a).

In der Stützstellung T erfüllen die Aufnahmen 174a, 174b gleichermaßen dieselbe Funktion, nämlich eine Haltefunktion, so dass sie als Halteaufnahmen bezeichnet werden können:

Der Querträger 162 liegt nämlich in der Stützstellung T an den in Richtung der Y-Achse verlaufenden Innenwänden der Aufnahmen 174a, 174b an, so dass er dem Basiskörper 158a, 158b in Richtung der X-Achse oder Längsachse 26 Halt bietet.

In Richtung der Y-Achse oder Querachse Y liegen die Stirnseiten oder Stirnwände 172 der Basiskörper 158a, 158b während der Führungsbewegung von der Nichtgebrauchsstellung N in Richtung der Stützstellung T im Wesentlichen flächig an den Innenseiten 176 der Kulissenkörper 168a, 168b an, so dass dadurch eine Führung ohne ein Verkanten des Basiskörpers 158a, 158b gewährleistet ist. Insofern bildet also der Basiskörper 158a, 158b einen Führungskörper.

Im letzten Abschnitt dieser vorgenannten Bewegung, jedenfalls in der Stützstellung T, stützen die Stirnseiten oder Stirnwände 172 des Basiskörpers 158a, 158b die Tragprofile 161 gegeneinander ab:

Die Stirnwände 172 des Basiskörpers 158a, 158b liegen dabei im Wesentlichen flächig an Innenflächen 177a, 177b der Führungskörper 165 oder Seitenschenkeln 178 eines Querverbinders 179 an, welcher ebenfalls die Tragprofile 161 miteinander verbindet (Figuren 7a, 7b). Die die Seitenschenkel 178 sowie die Innenflächen 177a, 177b bereitstellenden Wände der Führungskörper 165 liegen zumindest abschnittsweise im Wesentlichen flächig an den Seitenschenkeln 178 der Tragprofile 161 an. Somit bilden diese Wände also quasi Zwischenlagen zwischen den Stirnwänden 172 und den Seitenschenkeln 71, so dass der Basiskörper 158a, 158b die Tragprofile 161 innenseitig beziehungsweise im Bereich des Zwischenraumes 160 abstützt.

Der Basiskörper 158a, 158b bildet also eine Querstrebe oder eine Stütze, die mit dem Querträger 162 zusammenwirkt. Dieser wiederum ist im Wesentlichen zugfest, so dass die Kombination aus Querträger 162 und Basiskörper 158a, 158b sowohl eine Zugfestigkeit als auch eine Druckfestigkeit bezüglich der Y-Achse oder Querachse bereitstellt.

Weiterhin trägt zum formschlüssigen Halt der Stütze 23 bei, dass diese in der Stützstellung T an einem Anschlag 180a, 180b anschlägt, der vorliegend als Vertikalanschlag ausgestaltet ist. Die Anschläge 180a, 180b stehen vor die Innenflächen 177a, 177b zum Zwischenraum 160 hin vor. Eine Querwand 181a, 181b des Basiskörpers 158a, 158b schlägt am Anschlag 180a, 180b an.

Bei dem als Formkörper oder Kunststoffformstück ausgestalteten Führungskörper 165 ist der Anschlag 180 unmittelbar angeformt, beispielsweise durch Gießen, insbesondere Spritzgießen. Bei den Seitenschenkeln 178 hingegen ist der Anschlag 180b durch Ausstanzen eines Anschlagstückes oder Umkanten desselben gebildet. Im Bereich des Knickes sind Verstärkungsrippen oder Sicken zweckmäßig.

Jedenfalls ist der Anschlag 180 zum Querträger 162 beabstandet, derart, dass die Querwand 181 am Anschlag 180a, 180b anschlägt, während die an der entgegengesetzten Querseite angeordnete Querwand 182, zu der benachbart die Aufnahme 174a, 174b verläuft, etwa im Bereich des Querträgers 162 positioniert ist. Mithin entspricht also der Abstand zwischen einerseits dem Anschlag 180a, 180b und andererseits dem Querträger 162 etwa der Querbreite der Oberseite 175 des Basiskörpers 158a, 158b. Der Basiskörper 158a, 158b ist also in der Stützstellung T fest zwischen den Anschlägen 180a, 180b und dem Querträger 162 bezüglich der Längsachse 26 beziehungsweise X-Achse gehalten.

Das weitere Fixieren und Halten der Stütze 23 ist bei den beiden Ausführungsbeispielen gemäß Figuren 6 und 7 unterschiedlich:

Die Führungskörper 165 haben Aufnahmen 183 zur Aufnahme der Tragprofile 161. Korrespondierend mit der U-förmigen Gestalt der Läuferschienen 18 (Grundschenkel 70 / Seitenschenkel 71) ist die Aufnahme 183 U-förmig. Die Führungskörper 165 sind mit den Tragprofilen 161 fest verbunden, vorzugsweise verschraubt und/oder verklebt und/oder vernietet.

Neben den Aufnahmen 183 haben die Führungskörper 165 ebenso wie die Seitenschenkel 178 Aufnahmen 184, in denen der Querträger 162 aufgenommen ist.

Von dem vertikalen Anschlag 180a erstreckt sich nach unten hin eine Kurven- und Führungsbahn 185, die sich zweckmäßigerweise an die Kulisse 167 anschließt. Jedenfalls verläuft die Führungsbahn 185 in ihrem unteren Abschnitt parallel zur Längsachse oder X-Achse und dient als Stütze für den Kulissenfolger 171. Mithin stützt sich also die Stütze 23 unterseitig an der Führungsbahn 185 ab.

Die Stütze 23 des Ausführungsbeispiels gemäß Figuren 7a-7d stützt sich auf dem Querverbinder 179 ab. Dieser hat eine Bodenwand 186, auf der die Unterseite des Basiskörpers 158b in der Stützstellung T vorzugsweise aufliegt. Die Bodenwand 186 ist zweckmäßigerweise verrippt, was ihr Stabilität verleiht.

Zudem sind an der Bodenwand 186 Aufnahmen 187 vorgesehen, in die freie Enden der Tragarme 155 einsteckbar sind. Die Aufnahmen 187 sind z.B. als Durchbrüche oder Mulden ausgestaltet. Die Aufnahmen 187 bilden Steckaufnahmen und nehmen die freien Enden der vorliegend rohrförmigen und im Außenumfang kreisrunden Tragarme 155 formschlüssig auf. Jedenfalls ragen diese freien Enden der Tragarme 155 nach unten hin vor eine Bodenwand oder Bodenseite des Basiskörpers 158b vor, so dass sie in die Aufnahmen 187 einsteckbar sind. Somit ist also bereits durch Einstecken der freien Enden der Tragarme 155 in die Steck-Aufnahmen 187 ein fester Halt der Stütze 23 realisiert, besonders vorteilhaft in Zusammenwirkung mit dem Anschlag 180b und der formschlüssigen Aufnahme des Querträgers 162 in der (Quer-)Aufnahme 174b.

Ferner liegt der Kulissenfolger 171 vorteilhaft in der Stützstellung T auf einem Stützbereich 188 am Seitenschenkel 178 an, so dass eine unterseitige Abstützung der Stütze 23 auch durch die Führungseinrichtung 166b in der Stützstellung T vorhanden ist.

Zur weiteren Fixierung, insbesondere Verriegelung, sind Fixiereinrichtungen 190a, 190b vorgesehen.

Fixiervorsprünge 191a, 191b der Fixiereinrichtungen 190a, 190b sind beweglich bezüglich der Stützen 23 gelagert, die in einer Fixierstellung in Fixieraufnahmen 192a, 192b eingreifen.

Die Fixieraufnahmen 192a sind an den Tragprofilen 161 innenseitig, konkret an den Innenflächen 177a des Führungskörpers 165 angeordnet. Die Fixiervorsprünge 191a sind an Fixierbolzenkörpern 193 angeordnet, die in Querrichtung oder entlang der Y-Achse axial verschieblich am Basiskörper 158a gelagert sind. Mit Hilfe eines Betätigungsgetriebes 194 können die beiden Fixierbolzenkörper 193 außer Eingriff mit den Fixieraufnahmen 192a gebracht werden. Das Betätigungsgetriebe 194 umfasst ein Zahnrad 195, das auf Zahnstangen 196 wirkt, die ihrerseits wiederum mit den Fixierbolzenkörpern 193 fest verbunden oder einstückig sind. Jedenfalls kämmen die Zahnstangen 196 mit einander entgegengesetzten Außenumfangsseiten des Zahnrades 195, das um eine zur Verschieberichtung der Fixierbolzenkörper 193 senkrechte Achse dreht, dergestalt, dass bei einer Drehbetätigung des Zahnrades 195 beide Fixierbolzenkörper 193 entweder in Richtung der Fixierstellung oder aus dieser zurück betätigbar sind. Die Zahnstange 196 des in Figur 6b rechten Fixierbolzenkörpers 193 ist in unmittelbarer axialer Verlängerung desselben angeordnet, während die Zahnstange 196 des anderen Fixierbolzenkörpers 193 sozusagen das Zahnrad 195 hintergreift, so dass die beiden Zahnstangen 196 an einander entgegengesetzten Umfangsseiten des Zahnrades 195 mit diesem kämmen.

Das Zahnrad 195 kann mit einem Handgriff 197 betätigt werden, der vor den Basiskörper 158a vorsteht, beispielsweise die Oberseite 175, so dass er bequem ergriffen werden kann. Der Handgriff 197 ist durch eine nicht näher bezeichnete Drehwelle mit dem Zahnrad 195 drehfest verbunden.

Das Betätigungsgetriebe 194 ist gegenüber Umwelteinflüssen gekapselt im Innenraum des Basiskörpers 158b angeordnet. Lediglich die Fixiervorsprünge 191a und der Handgriff 197 stehen vor dieses Gehäuse vor.

In Richtung der Fixierstellung sind die Fixierbolzenkörper 193 durch Federn 198 federbelastet, die sich einerseits an Federstützen 199 im Innenraum des Basiskörpers 158a und andererseits an den Fixierbolzenkörpern 193 abstützen, beispielsweise an hierfür vorgesehenen Stufen oder Flanschvorsprüngen. Letztlich muss also der Bediener das Betätigungsgetriebe 194 lediglich in Richtung aus der Fixierstellung heraus betätigen, während in umgekehrter Richtung eine selbsttätige Verriegelung aufgrund der Federn 198 erfolgt.

Die Fixierbolzenkörper 193, insbesondere die Fixiervorsprünge 191a, können so getroffen sein, dass sie an der Führungsbahn 185 entlanggleiten, wenn die Stütze 23 im letzten Bewegungsabschnitt vor beziehungsweise nach Erreichen der Stützstellung T bewegt wird. Somit ist es also möglich, dass bei einem erfindungsgemäßen Lastenträger die Fixiervorsprünge oder ein Fixiervorsprung einer Fixiereinrichtung nicht nur seine Fixierungsfunktion realisiert, sondern zudem noch als Führungskörper der jeweiligen Führungseinrichtung dient.

Ferner ist es zweckmäßig, wenn die Fixiervorsprünge 191a durch die Kulisse 167 und/oder eine dazu benachbarte Führungsfläche, z.B. die Innenflächen 177a und/oder die ihnen zugewandten Innenflächen der Einführvorsprünge 170, geführt werden in einem Sinne entgegen der Fixierstellung, insbesondere vor Erreichen derselben, betätigt werden, z.B. entgegen der Kraft der Federn 198. In Richtung der Fixieraufnahmen 192a sind diese Führungsflächen schräg aufeinander zu verlaufend oder sich verjüngend. Der Bediener muss also den Handgriff 197 nicht betätigen, wenn er die Stütze 23 aus der Nichtgebrauchsstellung N in die Stützstellung T verstellt.

Ferner kann eine Führungseinrichtung eines erfindungsgemäßen Lastenträgers auch eine Klemmfunktion und/oder eine Rastfunktion vorteilhaft realisieren. Beispielsweise kann mindestens ein Kulissenfolger, insbesondere in einem Endbereich der Führungsbahn, in eine Rastaufnahme einrasten oder in einen Klemmsitz gelangen. So können z.B. die Kulissenfolger 171, insbesondere in der Stützstellung T, in eine optionale Rastaufnahme 204 (nahe beim Stützbereich 188) und/oder eine optionale Rastaufnahme 205 am fahrzeugseitigen Ende der Kulisse 167 einrasten. Mithin kann also eine Kulisse einer erfindungsgemäßen Führungseinrichtung eine insbesondere endeseitige Rastaufnahme aufweisen.

Demgegenüber ist die Ausführungsform gemäß Figuren 7a-7d noch einfacher aufgebaut und dabei effizient: Der Fixiervorsprung 191b umfasst eine federnde Platte oder Lasche 200, an deren freiem Ende ein Rasthaken 201 angeordnet ist. Die Lasche 200 federt beim Nach-unten-Bewegen der Stütze 23 in Richtung der Bodenwand 186 aufgrund einer in der Zeichnung nicht sichtbaren Schräge sozusagen automatisch in die Fixieraufnahme 192b ein, mit der sie sich verhakt. Somit ist also die Stütze 23 in vertikaler Richtung beziehungsweise in Richtung der Z-Achse mit dem Querverbinder 179, letztlich also auch mit dem Tragegestell 163 fest verbunden.

Nach unten hin, wo oft größere Kräfte auftreten, stützt die Stütze 23 sich auf der Bodenfläche oder Bodenwand 186 ab. In Richtung der Längsachse 26 beziehungsweise der X-Achse wirken die Anschläge 180b und der Querträger 162 mit der (Quer-)Aufnahme 174b zusammen, so dass in quasi allen Richtungen ein optimaler Halt der Stütze 23 bezüglich des Tragegestells 163 realisiert ist. Zugleich stützt der Basiskörper 158 die beiden Tragprofile 161 in Richtung des Zwischenraumes 160 ab, verstärkt also mithin das Tragegestell 163.

Ein Lösen der Fixiereinrichtung 190b ist sehr einfach realisierbar, indem nämlich der Benutzer auf eine Druckfläche 202 an der Vorderseite der Lasche 200, die ihrerseits an der Querwand 181b angeordnet ist, drückt, um den Rasthaken 201 außer Eingriff mit der zweckmäßigerweise als Langloch ausgestalteten, sich in Querrichtung beziehungsweise in Richtung der Y-Achse erstreckenden Fixieraufnahme 192b zu bringen. Dann kann die Stütze 23 nach vertikal oben, das heißt in Richtung der Z-Achse gezogen werden, wodurch auch die freien Enden der Tragarme 155 außer Eingriff mit den Aufnahmen 187 gelangen, so dass ein Bediener die Stütze 23 nunmehr ausgehend von der Stützstellung T, beziehungsweise etwas nach oben verlagert davon, um die durch den Querträger 162 definierte Schwenkachse schwenken und anschließend in Richtung des Kraftfahrzeuges 80 beziehungsweise in Richtung der Längsachse 26 verschieben kann.

Weiterhin kann es zweckmäßig sein, wenn der Basiskörper oder eine sonstige Komponente einer erfindungsgemäßen Stütze Rastmittel aufweist, um mit der Tragstruktur beziehungsweise dem Tragegestell verrastet zu werden. So steht beispielsweise ein Rastvorsprung 203 nach oben vor die Bodenwand 186 vor, der zum Eingriff in eine in der Zeichnung nicht sichtbare Rastaufnahme an der Unterseite des Basiskörpers 158b eingreifen kann. Der Rastvorsprung 203 ist in der Art einer Rippe ausgestaltet. Wenn also der Basiskörper 158b sozusagen über den Rastvorsprung 203 weggeschwenkt wird (um den Querträger 162), rastet der Rastvorsprung 203 in die Rastaufnahme an der Bodenseite des Basiskörpers 158b ein.

Bei dem Querverbinder 179 handelt es sich um ein Blechteil, insbesondere ein Stanz-/Biegeteil. Mithin sind also die Aufnahmen 184, die Anschläge 180b sowie auch die Steck-Aufnahmen 187, gegebenenfalls eine Verrippung oder auch der Rastvorsprung 203 durch Ausstanzen und/oder Ausbiegen oder Ausprägen gebildet.

Es versteht sich, dass das Tragegestell 163 auch Bestandteil eines lösbar am Kraftfahrzeug 80 befestigbaren Lastenträgers sein könnte, beispielsweise in der Art des in DE 10 2008 012 689 A1.

Der Funktionsträger 210, der den Schlitten 12 abschließt, umfasst einen Basiskörper 211, an dessen Querseiten sich die Schwenklager 122 mit den schwenkbaren Leuchten 21 befinden.

Bei dem Basiskörper 211 handelt es sich um ein Spritzteil oder Spritzgussteil, zweckmäßigerweise aus Kunststoff. Der Funktionsträger 210 vereint eine Vielzahl von Funktionen, insbesondere elektrische Funktion (Stromversorgung und Halterung der Leuchten 21), verstärkt den Schlitten 12, insbesondere quer zur Längsachse 26, und dient mit seinem Basiskörper 211 zudem noch als Lager und Halterung für ein Stoßfängerteil 89. Hierfür sind an der vom Schlitten 12 abgewandten Außenseite (Heckseite) des Basiskörpers 211 Montagevorsprünge 213 vorgesehen, mit denen ein Stoßfängerteil 89 am Basiskörper 211 befestigbar ist. Die Montagevorsprünge 213 enthalten in an sich bekannter Weise Rechts-Links-Gewinde, dergestalt, dass das Stoßfängerteil 89, das einen Abschnitt des Heckstoßfängers 86 bildet, in der gewünschten Tiefe und Höhe am Funktionsträger 210 montierbar beziehungsweise ausrichtbar ist.

Mittels einer Gelenkanordnung 220 ist es möglich, den Kennzeichenträger 13, der als eine Art Platte ausgestaltet ist, über das Stoßfängerteil 89 in der Art eines Galgens wegzuschwenken.

## Patentansprüche

1. Lastenträger für ein Kraftfahrzeug (80), insbesondere einen Personenkraftwagen, mit einem Tragegestell (163) zum Tragen von Lasten, wobei das Tragegestell (163) etwa in Richtung einer Längsachse (26) nebeneinander verlaufende, durch einen in Richtung einer zur Längsachse (26) quer verlaufenden Querachse (Y) orientierten Querträger (162) miteinander verbundene Tragprofile (161) aufweist, die einen Zwischenraum (160) begrenzen, und an dem Tragegestell (163) mindestens eine Stütze (23) zum Stützen der Last zwischen einer Stützstellung (T) und einer Nichtgebrauchsstellung (N) beweglich gelagert ist, und wobei die mindestens eine Stütze (23) in der Nichtgebrauchsstellung (N) im Wesentlichen in dem Zwischenraum (160) angeordnet ist und in der Stützstellung (T) zum Stützen der Last vor das Tragegestell (163) vorsteht, und wobei die Stütze (23) einen Basiskörper (158a, 158b) aufweist, wobei er eine Führungseinrichtung (166a, 166b) zur Führung der Stütze (23) in einer Tauchbewegung unter dem Querträger (162) hindurch bei der Bewegung zwischen der Nichtgebrauchsstellung (N) und der Stützstellung (T) aufweist, so dass die Stütze (23) in der Nichtgebrauchsstellung (N) unterhalb des Querträgers (162) angeordnet ist und in der Stützstellung (T) nach oben vor den Querträger (162) vorsteht, **dadurch gekennzeichnet, dass** sich der Basiskörper (158a, 158b) quer zwischen den Tragprofilen (161) erstreckt, und dass der Basiskörper (158a, 158b) mit dem Querträger (162) bei der Bewegung zwischen der Nichtgebrauchsstellung (N) und der Stützstellung (T) und/oder in der Stützstellung (T) zusammenwirkt und/oder in Führungskontakt und/oder in Haltekontakt ist.

2. Lastenträger nach Anspruch 1, **dadurch gekennzeichnet, dass** der Basiskörper (158a, 158b) sich zumindest in der Stützstellung (T) stirnseitig an den Tragprofilen (161) abstützt und/oder der Basiskörper (158a, 158b) als eine Querstrebe für das Tragegestell (163) ausgestaltet ist.

3. Lastenträger nach Anspruch 1 oder 2, **dadurch gekennzeichnet, dass** die Stütze (23) eine insbesondere an einer Aufnahme (174a; 174b) ausgebildete Führungsfläche zur Führung an dem Querträger (162) bei der Bewegung zwischen der Nichtgebrauchsstellung (N) und der Stützstellung (T) aufweist.

4. Lastenträger nach einem der vorhergehenden Ansprüche, **dadurch gekennzeichnet, dass** der Querträger (162) als Schwenklagerelement mit dem Basiskörper (158a, 158b) zusammenwirkt dergestalt, dass der Basiskörper (158a, 158b) bei der Bewegung zwischen der Nichtgebrauchsstellung (N) und der Stützstellung (T) um den Querträger (162) schwenkt.

5. Lastenträger nach einem der vorhergehenden Ansprüche, **dadurch gekennzeichnet, dass** an mindestens einem der Tragprofile (161) in einem Abstand zu dem Querträger (162) ein insbesondere vertikaler Anschlag (180, 180b) angeordnet ist, an dem die Stütze (23), insbesondere der Basiskörper (158a, 158b), in der Stützstellung (T) anschlägt.

6. Lastenträger nach einem der vorhergehenden Ansprüche, **dadurch gekennzeichnet, dass** die Stütze (23), insbesondere der Basiskörper (158a, 158b), in der Stützstellung (T) zwischen dem mindestens einen, insbesondere vertikalen, Anschlag (180a, 180b) und dem Querträger (162) gehalten ist.

7. Lastenträger nach einem der vorhergehenden Ansprüche, **dadurch gekennzeichnet, dass** die Stütze (23) in der Stützstellung (T) und/oder der Nichtgebrauchsstellung (N) formschlüssig an dem Querträger (162) und/oder an einem neben dem Querträger (162) in einem Abstand angeordneten und in Richtung der Querachse (Y) verlaufenden Querverbinder (179) gehalten ist oder sich auf dem Querträger (162) oder dem Querverbinder (179) abstützt.

8. Lastenträger nach einem der vorhergehenden Ansprüche, **dadurch gekennzeichnet, dass** die Stütze (23), insbesondere der Basiskörper (158a, 158b), eine Aufnahme (174a; 174b) aufweist, in der der Querträger (162) in der Nichtgebrauchsstellung (N) und/oder der Stützstellung (T) und/oder einer Stellung zwischen der Nichtgebrauchsstellung (N) und der Stützstellung (T) aufgenommen ist oder dass der Querträger (162) eine Aufnahme (174a; 174b) aufweist, in der der Basiskörper (158a, 158b) in der Nichtgebrauchsstellung (N) und/oder der Stützstellung (T) und/oder einer Stellung zwischen der Nichtgebrauchsstellung (N) und der Stützstellung (T) aufgenommen ist.

9. Lastenträger nach einem der vorhergehenden Ansprüche, **dadurch gekennzeichnet, dass** die Aufnahme (174a; 174b) als eine eine Schwenkbewegung zulassende Schwenklageraufnahme und/oder eine Schiebebewegung zulassende Schiebelageraufnahme ausgestaltet ist.

10. Lastenträger nach einem der vorhergehenden Ansprüche, **dadurch gekennzeichnet, dass** die Stütze (23) einen ersten und einen zweiten, insbesondere Seitenschenkel eines U-förmigen Bügels bildende, Tragarme (155) aufweist, die vor den Basiskörper (158a, 158b) vorstehen.

11. Lastenträger nach einem der vorhergehenden Ansprüche, **dadurch gekennzeichnet, dass** er eine Fixiereinrichtung (190a; 190b) zum Fixieren der Stütze (23) in der Stützstellung (T) und/oder der Nichtgebrauchsstellung (N) aufweist, die mindestens einen beweglichen Fixiervorsprung (191a, 191b) zum Eingriff in eine Fixieraufnahme (192a, 192b) aufweist, wobei der mindestens eine Fixiervorsprung (191a, 191b) an der Stütze (23) und die Fixieraufnahme (192a, 192b) am Tragegestell (163) oder umgekehrt angeordnet sind und der mindestens eine Fixiervorsprung (191a, 191b) und die Fixieraufnahme (192a, 192b) in einer Fixierstellung in Eingriff sind.

12. Lastenträger nach Anspruch 11, **dadurch gekennzeichnet, dass** der mindestens eine Fixiervorsprung (191a, 191b) einen in die Fixierstellung federnden oder federbelasteten Rasthaken und/oder einen insbesondere in die Fixierstellung federbelasteten Fixierbolzenkörper (193) umfasst und/oder dass die Fixiereinrichtung (190a; 190b) einen ersten Fixiervorsprung (191a) und einen zweiten Fixiervorsprung (191a) zum Eingriff in Fixieraufnahmen (192a) an den einander gegenüberliegenden Tragprofilen (161) aufweist und/oder dass der mindestens eine Fixiervorsprung (191b) zwischen den Tragprofilen (161) angeordnet ist und die Fixieraufnahme (192b) an dem Querträger (162) oder in an einem die Tragprofile (161) quer verbindenden Querverbinder (179) angeordnet ist und/oder dass die Fixiervorsprünge durch ein insbesondere beide Fixiervorsprünge betätigendes Betätigungsgetriebe (194) in die Fixierstellung und/oder aus der Fixierstellung betätigbar sind und/oder der mindestens eine Fixiervorsprung (191a, 191b) oder die Fixieraufnahme (192a, 192b) an oder in dem Basiskörper (158a, 158b) angeordnet ist.

13. Lastenträger nach einem der vorhergehenden Ansprüche, **dadurch gekennzeichnet, dass** die Stütze (23) in der Stützstellung (T) zwischen dem Querträger (162) und einem neben dem Querträger (162) in einem Abstand angeordneten und in Richtung der Querachse (Y) verlaufenden Querverbinder (179) gehalten ist und/oder bei der Bewegung zwischen der Stützstellung (T) und der Nichtgebrauchsstellung (N) zwischen dem Querträger (162) und dem Querverbinder (179) durchtaucht und/oder dass die Stütze (23) zwischen der Stützstellung (T) und der Nichtgebrauchsstellung (N) durch eine insbesondere schräg verlaufende Kulissenbahn (167) geführt ist.

14. Lastenträger nach einem der vorhergehenden Ansprüche, **dadurch gekennzeichnet, dass** das Tragegestell (163) Bestandteil eines Schlittens (12) ist, der an einer Schlittenführungsbasis (11) zwischen einer Ruhestellung (R) und einer Gebrauchsstellung insbesondere entlang einer Längsachse (26) verstellbar geführte Läuferschienen aufweist, wobei der Schlitten in der Gebrauchsstellung weiter als in der Ruhestellung vor die Schlitten-Führungsbasis vorsteht, und dass die Tragprofile (161) die Läuferschienen bilden oder daran angeordnet sind und/oder dass er eine Befestigungseinrichtung zur lösbaren Befestigung an dem Fahrzeug (80), insbesondere an einer Anhängekupplung des Fahrzeugs (80), aufweist.

## Claims

1. Load carrier for a motor vehicle (80), in particular a car, with a support frame (163) for the carrying of loads, wherein the support frame (163) has support profiles (161) running next to one another roughly in the direction of a longitudinal axis (26) and joined together by a cross-member (162) oriented in the direction of a transverse axis (Y) running transversely to the longitudinal axis (26), and which bound an intermediate space (160), and with the support frame (163) having at least one support (23) for supporting the load and mounted movably between a support position (T) and an inoperative position (N), and wherein the support or supports (23) is or are located substantially in the intermediate space (160) in the inoperative position (N), and in the support position (T) extend(s) beyond the support frame (163) to support the load, and wherein the support (23) has a base body (158a, 158b), wherein it has a guide fixture (166a, 166b) to guide the support (23) in a dipping movement below the cross-member (162) in the movement between the inoperative position (N) and the support position (T), so that the support (23) in the inoperative position (N) is located below the cross-member (162) and in the support position (T) projects upwards beyond the cross-member (162), **characterised in that** the base body (158a, 158b) extends transversely between the support profiles (161), and that the base body (158a, 158b) works together with the cross-member (162) during the movement between the inoperative position (N) and the support position (T) and/or in the support position (T) and/or is in guiding contact and/or holding contact.

2. Load carrier according to claim 1, **characterised in that** the base body (158a, 158b) rests, at least in the support position (T), with its end face on the support profiles (161), and/or the base body (158a, 158b) is designed as a cross brace for the support frame (163).

3. Load carrier according to claim 1 or 2, **characterised in that** the support (23) has a guide surface, formed in particular on a seating (174a, 174b), for guidance on the cross-member (162) during the movement between the inoperative position (N) and the support position (T).

4. Load carrier according to any of the preceding claims, **characterised in that** the cross-member (162) as swivel bearing element works together with the base body (158a, 158b) in such a way that the base body (158a, 158b) swivels around the cross-member (162) during the movement between the inoperative position (N) and the support position (T).

5. Load carrier according to any of the preceding claims, **characterised in that** a stop (180, 180b), in particular vertical, is provided on at least one of the support profiles (161) at a distance from the cross-member (162) and that the support (23), in particular the base body (158a, 158b), strikes against it in the support position (T).

6. Load carrier according to any of the preceding claims, **characterised in that** the support (23), in particular the base body (158a, 158b), is held in the support position (T) between the stop or stops (180a, 180b), which are in particular vertical, and the cross-member (162).

7. Load carrier according to any of the preceding claims, **characterised in that** the support (23) is held in the support position (T) and/or the inoperative position (N) positively on the cross-member (162) and/or on a cross-connector (179) mounted at a distance from and next to the cross-member (162) and running in the direction of the transverse axis (Y), or rests on the cross-member (162) or the cross-connector (179).

8. Load carrier according to any of the preceding claims, **characterised in that** the support (23), in particular the base body (158a, 158b), has a seating (174a, 174b) in which the cross-member (162) is held in the inoperative position (N) and/or the support position (T) and/or a position between the inoperative position (N) and the support position (T), or that the cross-member (162) has a seating (174a, 174b) in which the base body (158a, 158b) is held in the inoperative position (N) and/or the support position (T) and/or a position between the inoperative position (N) and the support position (T).

9. Load carrier according to any of the preceding claims, **characterised in that** the seating (174a, 174b) is designed as a swivel bearing seating allowing a swivel movement and/or a sliding bearing seating allowing a sliding movement.

10. Load carrier according to any of the preceding claims, **characterised in that** the support (23) has first and second support arms (155), in particular side legs of a U-shaped bracket, which extend in front of the base body (158a, 158b).

11. Load carrier according to any of the preceding claims, **characterised in that** it has a fixing device (190a, 190b) for fixing the support (23) in the support position (T) and/or the inoperative position (N) and which has at least one movable fixing projection (191a, 191b) for engaging in s fixing location (192a, 192b), wherein the fixing projection or projections (191a, 191b) is or are mounted on the support (23) and the fixing location (192a, 192b) on the support frame (163) or vice-versa, and the fixing projection or projections (191a, 191b) and the fixing location (192a, 192b) are in engagement in a fixing position.

12. Load carrier according to claim 11, **characterised in that** the fixing projection or projections (191 a, 191 b) comprise a latching hook which is sprung or spring-loaded in the fixing position, and/or a fixing pin body (193) in particular spring-loaded in the fixing position, and/or that the fixing device (190a, 190b) has a first fixing projection (191 a) and a second fixing projection (191 a) for engaging in fixing locations (192a) on the support profiles (161) lying opposite one another, and/or that the fixing projection or projections (191b) is or are located between the support profiles (161) and the fixing location (192b) is provided on the cross-member (162) or in a cross-connector (179) which connects the support profiles (161) transversely, and/or that the fixing projections may be actuated into the fixing position and/or out of the fixing position by an actuating mechanism (194), in particular actuating both fixing projections, and/or the fixing projection or projections (191 a, 191b) or the fixing location (192a, 192b) is or are provided on or in the base body (158a, 158b).

13. Load carrier according to any of the preceding claims, **characterised in that** the support (23) is held in the support position (T) between the cross-member (162) and a cross-connector (179) arranged at a distance next to the cross-member (162) and running in the direction of the transverse axis (Y), and/or dips through between the cross-member (162) and the cross-connector (179) in the course of the movement between the support position (T) and the inoperative position (N), and/or that the support (23) is guided between the support position (T) and the inoperative position (N) by a slotted link track (167), in particular running at an angle.

14. Load carrier according to any of the preceding claims, **characterised in that** the support frame (163) is part of a carriage (12) which has, on a carriage guide base (11), running rails guided adjustably, in particular along a longitudinal axis (26), between a rest position (R) and a position of use, wherein the carriage extends further beyond the carriage guide base in the position of use than in the rest position, and that the support profiles (161) form or are mounted on the running rails and/or that it has a fastening device for releasable attachment to the motor vehicle (80), in particular to a trailer coupling of the motor vehicle (80).

## Revendications

1. Support de charges pour un véhicule automobile (80), en particulier pour une voiture automobile particulière, comprenant un châssis porteur (163) servant à supporter des charges, sachant que le châssis porteur (163) présente des profilés porteurs (161) s'étendant les uns à côté des autres en direction d'un axe longitudinal (26), reliés les uns aux autres par un support transversal (162) orienté en direction d'un axe transversal (Y) s'étendant de manière transversale par rapport à l'axe longitudinal (26), lesdits profilés porteurs délimitant un espace intermédiaire (160), et sachant qu'au moins un système de soutien (23) servant à soutenir la charge est logé au niveau du châssis porteur (163) de manière mobile entre une position de soutien (T) et une position de non utilisation (N), et sachant que le système de soutien (23) au moins au nombre de un est disposé, dans la position de non utilisation (N), essentiellement dans l'espace intermédiaire (160) et fait saillie, dans la position de soutien (T) aux fins du soutien de la charge, du châssis porteur (163), et sachant que le système de soutien (23) présente un corps de base (158a, 158b), lequel présente un système de guidage (166a, 166b) servant à guider le système de soutien (23) dans un déplacement de plongée de manière à passer sous le support transversal (162) lors du déplacement entre la position de non utilisation (N) et la position de soutien (T) de sorte que le système de soutien (23) est disposé, dans la position de non utilisation (N), sous le support transversal (162) et fait saillie, dans la position de soutien (T) vers le haut du support transversal (162), **caractérisé en ce que** le corps de base (158a, 158b) s'étend de manière transversale entre les profilés de support (161), et **en ce que** le corps de base (158a, 158b) coopère avec le support transversal (162) lors du déplacement entre la position de non utilisation (N) et la position de soutien (T) et/ou dans la position de soutien (T) et/ou est en contact de guidage et/ou en contact de maintien.

2. Support de charges selon la revendication 1, **caractérisé en ce que** le corps de base (158a, 158b) s'appuie au moins dans la position de soutien (T) côté frontal au niveau des profilés de support (161), et/ou **en ce que** le corps de base (158a, 158b) est configuré sous la forme d'une entretoise transversale pour le châssis de support (163).

3. Support de charges selon la revendication 1 ou 2, **caractérisé en ce que** le système de soutien (23) présente une surface de guidage réalisée en particulier au niveau d'un logement (174a ; 174b), destiné au guidage au niveau du support transversal (162) lors du déplacement entre la position de non utilisation (N) et la position de soutien (T).

4. Support de charges selon l'une quelconque des revendications précédentes, **caractérisé en ce que** le support transversal (162) coopère en tant qu'élément formant palier de pivotement avec le corps de base (158a, 158b) de telle manière que le corps de base (158a, 158b) pivote autour du support transversal (162) lors du déplacement entre la position de non utilisation (N) et la position de soutien (T).

5. Support de charges selon l'une quelconque des revendications précédentes, **caractérisé en ce qu'**est disposée, au niveau au moins d'un des profilés de support (161), à une certaine distance du support transversal (162), une butée (180, 180b) en particulier verticale, contre laquelle le système de soutien (23), en particulier le corps de base (158a, 158b), vient buter en position de soutien (T).

6. Support de charges selon l'une quelconque des revendications précédentes, **caractérisé en ce que** le système de soutien (23), en particulier le corps de base (158a, 158b), est maintenu dans la position de soutien (T), entre la butée (180a, 180b) en particulier verticale au moins au nombre de une et le support transversal (162).

7. Support de charges selon l'une quelconque des revendications précédentes, **caractérisé en ce que** le système de soutien (23) est maintenu dans la position de soutien (T) et/ou dans la position de non utilisation (N) par complémentarité de forme au niveau du support transversal (162) et/ou au niveau d'une traverse de liaison (179) disposée à une certaine distance à côté du support transversal (162) et/ou s'étendant en direction de l'axe transversal (Y) ou s'appuie sur le support transversal (162) ou sur la traverse de liaison (179).

8. Support de charges selon l'une quelconque des revendications précédentes, **caractérisé en ce que** le système de soutien (23), en particulier le corps de base (158a, 158b) présente un logement (174a ; 174b), dans lequel est logé le support transversal (162) dans la position de non utilisation (N) et/ou dans la position de soutien (T) et/ou dans une position entre la position de non utilisation (N) et la position de soutien (T), ou **en ce que** le support transversal (162) présente un logement (174a ; 174b), dans lequel le corps de base (158a, 158b) est logé dans la position de non utilisation (N) et/ou dans la position de soutien (T) et/ou dans une position entre la position de non utilisation (N) et la position de soutien (T).

9. Support de charges selon l'une quelconque des revendications précédentes, **caractérisé en ce que** le logement (174a ; 174b) est configuré sous la forme d'un logement à palier pivotant autorisant un mouvement de pivotement et/ou sous la forme d'un logement à palier coulissant autorisant un mouvement de coulissement.

10. Support de charges selon l'une quelconque des revendications précédentes, **caractérisé en ce que** le système de soutien (23) présente un premier et un deuxième bras de support (155) formant en particulier des branches latérales d'un étrier en forme de U, lesdits bras de support faisant saillie du corps de base (158a, 158b).

11. Support de charges selon l'une quelconque des revendications précédentes, **caractérisé en ce qu'**il présente un système de fixation (190a ; 190b) servant à fixer le système de soutien (23) dans la position de soutien (T) et/ou dans la position de non utilisation (N), lequel système de fixation présente au moins une partie mobile de fixation faisant saillie (191a, 191b) destinée à venir en prise avec un logement de fixation (192a, 192b), sachant que la partie de fixation faisant saillie (191a, 191b) au moins au nombre de une est disposée au niveau du système de soutien (23) et que le logement de fixation (192a, 192b) est disposé au niveau du châssis de support (163) ou inversement, et que la partie de fixation faisant saillie (191a, 191b) au moins au nombre de une et le logement de fixation (192a, 192b) sont en prise dans une position de fixation.

12. Support de charges selon la revendication 11, **caractérisé en ce que** la partie de fixation faisant saillie (191a, 191b) au moins au nombre de une comprend un crochet d'enclenchement à ressorts ou chargé par ressort dans la position de fixation et/ou un corps de boulon de fixation (193) chargé par ressort en particulier dans la position de fixation, et/ou **en ce que** le système de fixation (190a ; 190b) présente une première partie de fixation faisant saillie (191a) et une deuxième partie de fixation faisant saillie (191a) destinées à venir en prise au niveau de logements de fixation (192a) au niveau des profilés de support (161) se faisant face les uns les autres, et/ou **en ce que** la partie de fixation faisant saillie (191 b) au moins au nombre de une est disposée entre les profilés de support (161), et **en ce que** le logement de fixation (192b) est disposé au niveau du support transversal (162) ou au niveau d'une traverse de liaison (179) reliant de manière transversale les profilés de support (161), et/ou en ce que les parties de fixation faisant saillie peuvent être actionnées par une transmission d'actionnement (194) actionnant en particulier les deux parties de fixation faisant saillie dans la position de fixation et/ou hors de la position de fixation, et/ou **en ce que** la partie de fixation faisant saillie (191 a, 191b) au moins au nombre de une ou le logement de fixation (192a, 192b) sont disposés au niveau du corps de base (158a, 158b) ou dans ce dernier.

13. Support de charges selon l'une quelconque des revendications précédentes, **caractérisé en ce que** le système de soutien (23) est maintenu dans la position de soutien (T) entre le support transversal (162) et une traverse de liaison (179) disposée à côté du support transversal (162) à une certaine distance et s'étendant en direction de l'axe transversal (Y), et/ou s'enfonce entre le support transversal (162) et la traverse de liaison (179) lors du mouvement entre la position de soutien (T) et la position de non utilisation (N), et/ou **en ce que** le système de soutien (23) est guidé, entre la position de soutien (T) et la position de non utilisation (N), par une coulisse (167) s'étendant en particulier de manière oblique.

14. Support de charges selon l'une quelconque des revendications précédentes, **caractérisé en ce que** le châssis de support (163) fait partie intégrante d'un chariot (12), qui présente, au niveau d'une base de guidage de chariot (11), des rails de roulement guidés de manière à pouvoir se déplacer entre une position de repos (T) et une position d'utilisation en particulier le long d'un axe longitudinal (26), sachant que le chariot fait saillie de la base de guidage de chariot davantage dans la position d'utilisation que dans la position de repos, et **en ce que** les profilés de support (161) forment les rails de roulement ou sont disposés au niveau de ces derniers, et/ou **en ce que** le chariot présente un système de fixation servant à la fixation amovible au niveau du véhicule (80), en particulier au niveau d'un attelage de remorque du véhicule (80).
